(19) Europäisches Patentamt
European Patent Office
Office européen des brevets

(11) Numéro de publication : **0 388 272 B1**

(12) **FASCICULE DE BREVET EUROPEEN**

(45) Date de publication du fascicule du brevet :
08.06.94 Bulletin 94/23

(51) Int. Cl.⁵ : **B61L 27/04**

(21) Numéro de dépôt : **90400648.3**

(22) Date de dépôt : **12.03.90**

(54) **Système de commande de la progression de plusieurs convois ferroviaires sur en réseau.**

(30) Priorité : **17.03.89 FR 8903555**

(43) Date de publication de la demande :
**19.09.90 Bulletin 90/38**

(45) Mention de la délivrance du brevet :
**08.06.94 Bulletin 94/23**

(84) Etats contractants désignés :
**AT BE CH DE DK ES FR GB GR IT LI LU NL SE**

(56) Documents cités :
**DE-A- 3 337 183**
**GB-A- 2 189 066**

(73) Titulaire : **AUTOMATISMES CONTROLES ET ETUDES ELECTRONIQUES**
**Z.I. Boulazac**
**24000 Périgueux (FR)**

(72) Inventeur : **Malon, Jean-Pierre**
**Ferrieres**
**F-24420 Savignac-les-Eglises (FR)**

(74) Mandataire : **Obolensky, Michel et al**
**c/o CABINET LAVOIX**
**2, place d'Estienne d'Orves**
**F-75441 Paris Cédex 09 (FR)**

## Description

La présente invention est relative aux systèmes de contrôle de la circulation des trains sur un réseau ferroviaire et se rapporte plus particulièrement à un système de gestion de réseau ferroviaire à partir d'un poste central.

On connait des systèmes de gestion de réseaux ferroviaires comportant des moyens de localisation et de transmission équipant chaque train, un certain nombre d'ordinateurs répartis au sol sur l'ensemble du réseau et reliés entre eux, capables à tout moment de demander aux trains leur position et leur vitesse et de déterminer la position des aiguillages placés sur l'itinéraire des trains interrogés. Les informations reçues par les ordinateurs constituent une base de données fournissant une réprésentation complète et quasiment instantanée du réseau et des trains qui circulent sur celui-ci.

Ces systèmes connus sont en outre pour vus de moyens informatiques qui à partir des données collectées assurent la régulation du trafic en intervenant sous la forme d'ordres donnés aux conducteurs des trains, d' autorisations de consignes ou de conseils de pilotage.

Ces systèmes connus présentent l'inconvénient de nécessiter des informations de vitesse de chaque train et d'utiliser pour la détermination de la vitesse d'un convoi des capteurs de vitesse assurant un comptage de tours de roues. Ces capteurs de vitesse manquent de précision car ils donnent lieu à des erreurs cumulatives.

La compensation de ces erreurs nécessite l'emploi de balises électroniques disposées à peu près tous les kilomètres sur le ballast ce qui accroît le coût de l'installation.

L'invention vise à créer un système de gestion de réseau ferroviaire qui tout en étant d'une constitution relativement simple notamment en ce qui concerne les équipements de voie présente une sécurité accrue par rapport aux systèmes existants.

Elle a donc pour objet un système de commande de la progression de plusieurs convois ferroviaires sur un réseau, chaque convoi étant équipé d'un dispositif embarqué de détection de la position du convoi par rapport à la voie et de moyens d'émission-réception communiquant avec un poste central, ledit poste central comprenant des moyens de mémorisation instantanée des positions relatives, de tous les convois sur le réseau, des moyens de mémorisation des itinéraires de chaque convoi ainsi que des caractéristiques du réseau liées à l'encadrement de vitesse, et des performances des matériels roulants en service, caractérisé en ce que ledit poste central constitue l'organe d'initiative du système et comporte des moyens d'émission à intervalles de temps réguliers, de messages contenant les numéros d'identification des convois en circulation qui sont autorisés à poursuivre leur route compte tenu des informations de position reçues de ces convois par le poste central et des paramètres d'encadrement de vitesse contenus dans les moyens de mémorisation et en ce que le dispositif embarqué de chaque convoi constitue l'organe d'éxécution du système et comporte des moyens de reconnaissance du numéro d'identification du convoi auquel il est associé et de moyens de commande de l'arrêt du convoi en l'absence du numéro d'identification dans le message qu'il reçoit du poste central.

Le système suivant l'invention permet à chacun des convois d'être suivi par un contrôle quasi-continu de survitesse et un contrôle de la décélération devant tout point d'arrêt.

Lorsqu'un train atteint une limite de vitesse ou n'adopte pas une décélération suffisante pour garantir un point d'arrêt, le système suivant l'invention applique le freinage de service jusqu'à ramener sa vitesse dans les limites autorisées.

Le système suivant l'invention effectue en fait un suivi intégral de la circulation des trains sur le réseau qu'il gère et sa structure lui permet de réaliser une protection d'espace mobile et déformable.

L'invention sera mieux comprise à l'aide de la description qui va suivre, donnée uniquement à titre d'exemple et faite en se référant aux dessins annexés, sur lesquels :
- la Fig. 1 est un schéma général d'un système de gestion de réseau ferroviaire suivant l'invention;
- la Fig.2 est un schéma synoptique de l'équipement embarqué sur un train du système de la Fig. 1;
- la Fig.3 est un schéma synoptique plus détaillé de la structure du dispositif embarqué;
- la Fig.4 est un schéma plus détaillé de l'interface de traitement des signaux radar;
- la Fig.5 est un schéma synoptique de l'interface de transmission des signaux délivrés par le dispositif embarqué vers son émetteur-récepteur;
- la Fig.5a est un schéma montrant le mode d'introduction des données propres au système dans le flux de phonie;
- la Fig.6 est un schéma synoptique du poste central du système suivant l'invention;
- la Fig.7 est un schéma représentant la disposition des groupes de balises passives sur une voie d'un réseau ferroviaire équipé du système suivant l'invention;
- les Fig.8a et 8b sont des diagrammes illustrant le suivi, la protection et le contrôle de ralentissement d'un train à l'aide du système suivant l'invention;

- la Fig.9 est un schéma montrant la répartition des balises sur le réseau;
- les Fig. 10 à 12 représentent l'organigramme général de fonctionnement du système suivant l'invention;
- la Fig. 13 représente un organigramme du traitement des signaux engendrés par les balises au sol;
- la Fig. 14 représente un organigramme d'acquisition et de reconnaissance des messages formés par les balises au sol;
- la Fig. 15 est un organigramme de traitement du signal doppler;
- la Fig. 16 est un organigramme du traitement par l'équipement embarqué du système, des messages provenant du poste central;
- la Fig. 17 est un organigramme illustrant le traitement du chien de garde; et
- la Fig. 18 représente de façon plus détaillée le circuit de freinage de service associé au circuit de la Fig.3.

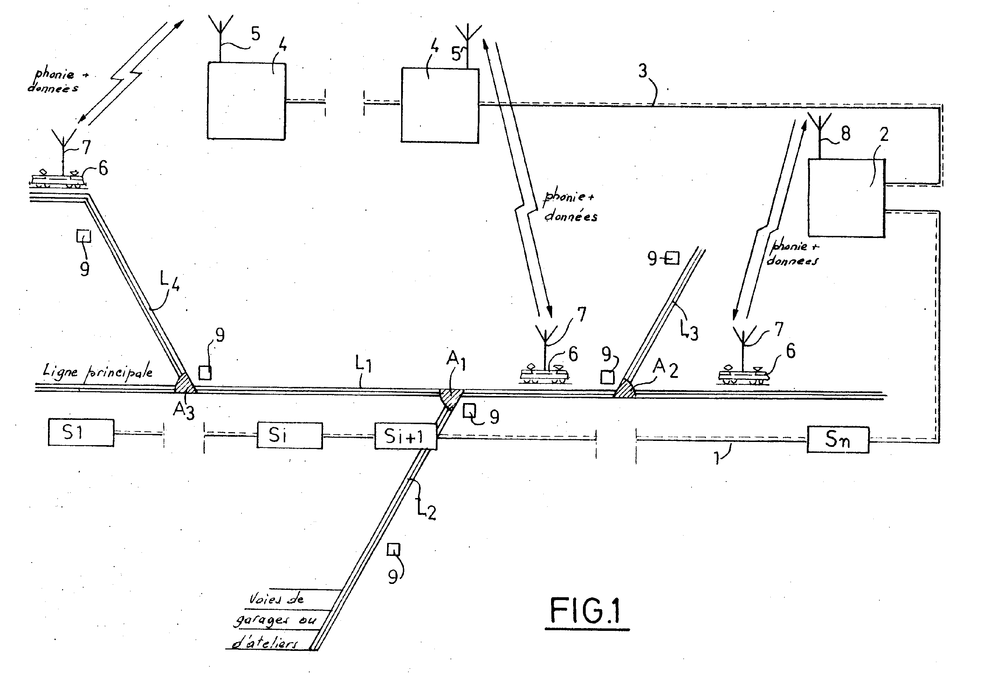

L'architecture générale du système suivant l'invention va être décrite en référence à la Fig. 1.

Le réseau géré par le système est représenté par une ligne principale L1 à laquelle sont raccordés des embranchements L2, L3 par des aiguillages A1, A2 correspondants.

A la ligne principale L1 est en outre raccordée par un aiguillage A3, une ligne secondaire L4 non gérée par le système.

Le long de la ligne principale L1 sont disposées des stations S1, .... Si, Si + 1, ....., Sn équipées de moyens logiques de commande de signalisation tels que des feux par exemple.

Les stations S1 à Sn sont reliées entre elles par une liaison téléphonique spécialisée 1, qui relie en outre les stations précitées à un poste central 2 de gestion en temps réel de la ligne L1, ou elles communiquent chacune avec le poste central grâce à une liaison hertzienne.

Le poste central 2 est à son tour relié par une liaison téléphonique 3, ou une liaison hertzienne, à des relais hertziens 4 pourvus d'antennes VHF 5 au moyen desquelles ils sont en communication avec des équipements embarqués à bord de motrices 6 également pourvues d'antennes VHF 7.

Le poste central 2 est lui aussi pourvu de moyens émetteurs-récepteurs à antenne VHF 8 de mise en communication par voie hertzienne avec les équipements embarqués des convois circulant au sein de sa maille comme les relais hertziens 4.

Le long des lignes sont disposées à des emplacements déterminés des balises 9 d'introduction des convois dans le réseau géré par le système suivant l'invention.

Le rôle du poste central 2 est de recevoir, contrôler et traiter les informations de l'état du réseau qu'il gère pour autoriser ou interdire la marche des trains ainsi que leur entrée dans le réseau et leur sortie du réseau.

Les équipements embarqués sur les motrices 6 et les balises 9 qui relocalisent la position de chaque convoi sont les informateurs, pour le poste central 2, de l'état d'occupation du réseau.

Le poste central 2 comporte deux calculateurs (pour remédier aux problèmes de disponibilité) qui sont en permanence informés de la position réelle de l'ensemble des trains en circulation et, par conséquent, de leurs positions relatives sur le réseau.

Ces calculateurs connaissent également la position géographique de l'état des appareils de voies du réseau et de ce fait, les itinéraires tracés.

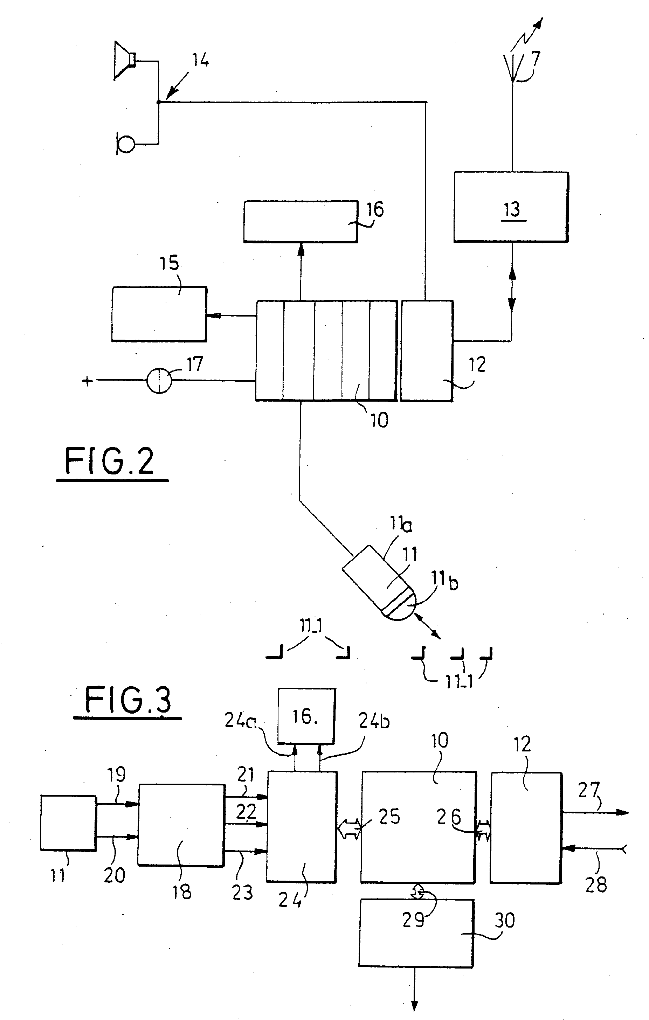

Le dispositif embarqué équipant chaque train est représenté schématiquement à la Fig.2.

Il comporte principalement un calculateur de bord 10 connecté par une de ses entrées à un radar Doppler 11 de détermination de déplacement du train par rapport à la voie qu'il parcourt.

Le radar Doppler coopère d'une part avec le sol et d'autre part avec des balises passives 11-1 constituées par des groupes de dièdres, disposés le long de la voie à intervalles décrits et connus du poste central 2, et dont le nombre et l'intervalle sont liés au niveau de précision du radar et à la précision souhaitée.

Détectée par un convoi et transmise sous forme codée au poste central 2, la disposition de ces balises sur la voie caractérise la position géographique exacte de ce même convoi.

Ces balises sont passives et constituées d'éléments métalliques soudés sur la semelle du rail dans le mode préféré mais non limitatif de l'invention.

Elles sont groupées en des points géographiques précis et la mesure de l'espace relatif séparant chacun de ces élément permet de transmettre au train un message codé à transmettre au poste central en vue de sa localisation précise.

Le calculateur 10 est en outre connecté par l'intermédiaire d'un circuit d'interface de transmission 12 à un émetteur-récepteur 13 pourvu de son antenne VHF 7 et à un équipement phonique 14 destiné au conducteur.

Le calculateur 10 est de plus connecté à un système de visualisation 15 destiné au conducteur 15, à un circuit de commande de freinage de service ou d'urgence 16 et à une clé 17 de vitesse limitée.

La marche du train n'est rendue possible que lorsque le circuit de commande de freinage de service est inactif.

L'objectif final du dispositif embarqué est de fournir un freinage de service chaque fois que les contraintes de sécurité l'imposent.

Le freinage de service doit être inhibé chaque fois que l'une au moins des trois fonctions suivantes est vérifiée.

a) autorisation de marche fournie par le poste central 2 ou fonction AM1,

b) autorisation de marche inscrite au sol lors du passage du train dans des tunnels et dans des zones d'ombre appelée fonction AM2,

c) la clé 17 de vitesse limitée est activée.

La tâche du calculateur embarqué 10 consiste à traiter l'ensemble des signaux qu'il reçoit en provenance du radar 11, à partir du sol et des balises de l'équipement au sol dont il sera question par la suite, de l'émetteur-récepteur 13 et d'élaborer à partir de ces signaux les instructions d'autorisation de marche AM1 et AM2.

La clé 17 de vitesse limitée à la disposition du conducteur permet une marche dégradée en cas de défaillance du système suivant l'invention.

Le schéma synoptique représenté à la Fig.3 montre plus en détail la structure du dispositif embarqué.

Sur ce schéma, le radar Doppler 11 est connecté à un circuit d'interface 18 de traitements des signaux radar par l'intermédiaire de deux voies 19 et 20.

Le circuit d'interface 18 est connecté par trois sorties 21, 22,23 à des entrées correspondantes d'un circuit 24 d'interface parallèle en communication avec une unité centrale de traitement qui constitue le calculateur 10 de la Fig.2, par un bus 25.

Le circuit d'interface de commande du freinage d'urgence 16 est relié au circuit d'interface 24 par des liaisons 24a et 24b (AM1 et AM2).

L'unité centrale 10 est reliée par un bus 26 au circuit d'interface 12 de communication hertzienne qui comporte une sortie 27 vers l'émetteur VHF et une entrée 28 de réception de signaux du récepteur VHF de l'émetteur-récepteur 13 (Fig.2), en provenance du poste central 2 (Fig. 1).

L'unité centrale 10 est en outre reliée par un bus 29 à un circuit 30 d'interface de transmission série vers le poste de visualisation 15 (Fig.2) à disposition du conducteur.

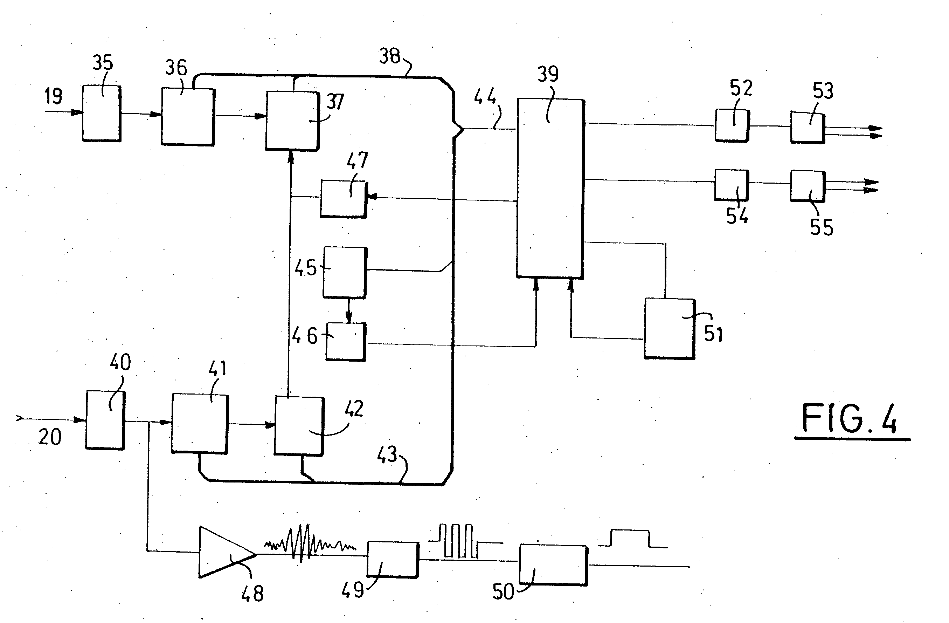

Le circuit 18 d'interface de traitement des signaux radar va être décrit en détail en référence à la Fig.4.

L'entrée 19 provenant du radar Doppler 11 et constituant la voie 1 du dispositif, est connectée à un filtre passe-bas 35 dont la fréquence de coupure Fc est de 5 KHz.

La sortie du filtre 35 est connectée à l'entrée d'un amplificateur à gain variable 36 dont la sortie est connectée à un circuit 37 de conversion analogique-numérique relié par un bus de données 38 qui aboutit également à l'amplificateur 36, à un microprocesseur 39 contenant un programme de traitement de signal.

L'entrée 20 provenant du radar 11 qui constitue la voie 2 du dispositif est connectée de façon analogue au microprocesseur 39 par l'intermédiaire d'un filtre passe-bas 40, d'un amplificateur à gain variable 41 d'un circuit de conversion analogique-numérique 42 et d'un bus 43 qui rejoint le bus 38 pour former un bus de données commun 44.

Un circuit d'horloge programmable 45 est relié au bus 43.

Il est en outre connecté à un circuit logique d'interruption 46 dont la sortie est connectée à une entrée d'interruption du microprocesseur 39.

Les deux convertisseurs analogique-numérique 37 et 42 comportent en outre des entrées connectées à la sortie d'un circuit diviseur 47 du signal d'horloge de base délivré par le microprocesseur 39.

Entre le filtre passe-bas 40 et l'amplificateur 41 est connecté un amplificateur 48 dont la sortie est connectée à l'entrée d'un circuit à seuil 49.

La sortie du circuit à seuil 49 est connectée à un redresseur de signal 50 dont la sortie délivre un signal SDI qui est le signal radar réfléchi par les dièdres disposés sur la voie puis traité pour fournir un créneau à chaque dièdre rencontré.

Au microprocesseur 39 est associé un circuit 51 chien de garde et de remise à zéro.

Une sortie du microprocesseur 39 est connectée par l'intermédiaire d'un circuit 52 d'isolation galvanique à un circuit 53 d'interface dont les sorties délivrent le signal Doppler numérisé.

Une autre sortie du microprocesseur 39 est connectée par l'intermédiaire d'un circuit d'isolation galvanique 54 à un circuit d'interface 55 dont les sorties délivrent un signal de sens du déplacement du train par rapport à la voie.

Les circuits d'interface 53 et 55 sont connectés aux entrées correspondantes du circuit adaptateur 24 du schéma de la Fig.3.

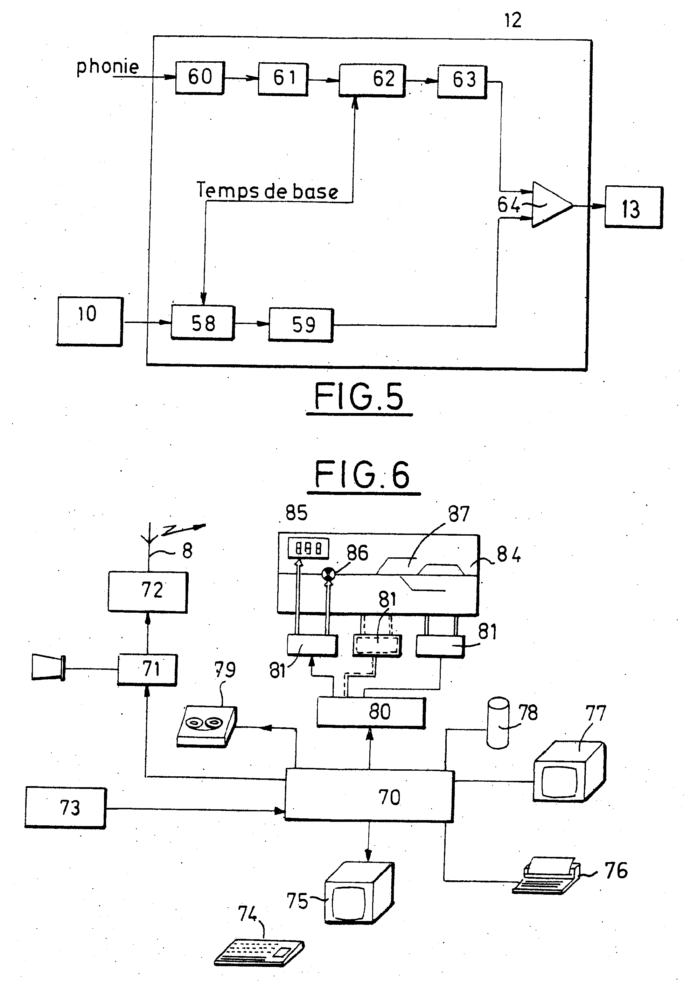

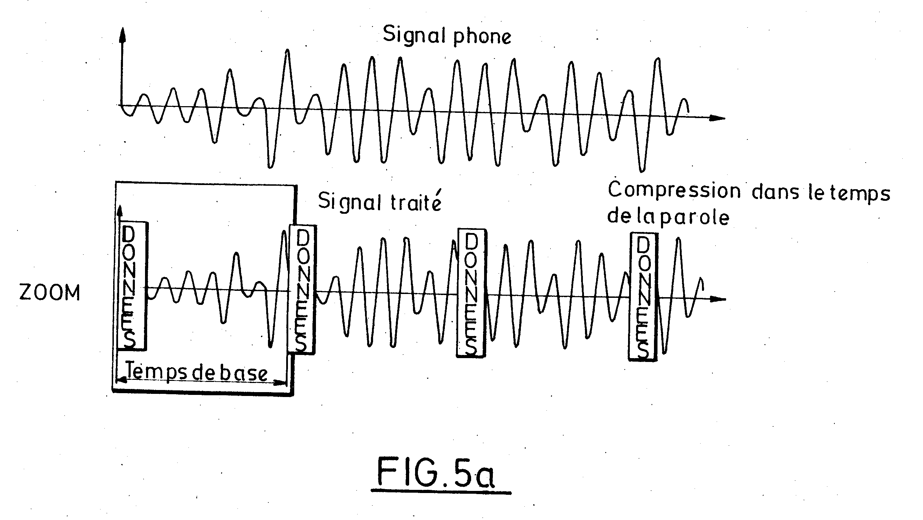

Le circuit 12 d'interface de transmission vers l'émetteur-récepteur 13 du dispositif décrit en référence aux Fig.2 et 3 est représenté plus en détail à la Fig.5.

Il comporte un circuit logique 58 de transmission de données dont l'entrée est connectée à la sortie de l'unité centrale 10 (Fig.3) et dont la sortie est connectée à un modem 59 de 1200 bauds par exemple.

Une seconde entrée du circuit 12 est connectée à la voie phonie d'entrée provenant des équipements 14 de la Fig.2 et comporte un filtre passe-bas 60 connecté à un convertisseur analogique-numérique 61. La sortie du convertisseur 61 est connectée à une mémoire temporaire 62 qui, par l'intermédiaire d'un convertisseur numérique-analogique 63 est connectée à une entrée d'un additionneur 64 dont une autre entrée est connectée à la sortie du modem 59.

L'additionneur 64 est connecté par sa sortie à l'émetteur-récepteur 13 (Fig. 2).

Le circuit d'interface 12 permet d'insérer la transmission des données numériques modulées dans le canal phonie, sans en perturber les caractéristiques.

Le schéma représenté (Fig.5a) montre comment, à chaque cycle de rafraichissement des informations du réseau (temps de base) sont insérées, dans le flux de phonie, les données propres du système suivant l'invention.

Les données élaborées par le calculateur de bord 10 (Fig.5), sont sérialisées par le circuit 58 pour fournir un signal en bande de base modulé ensuite par le circuit 59.

Le flux de phonie, après filtrage par le circuit 60 et conversion numérique par le ciruit 61, est stocké temporairement dans la mémoire vive 62.

La synchronisation des circuits 58 et 62 est assurée par une horloge fournie par le calculateur 10 synchrone du temps de base.

Cette synchronisation permet, à l'aide des circuits 59 et 63 une sommation des signaux "phonie compressée" et "données modulées" par le circuit 64. La sortie de ce dernier fournit alors un signal directement exploitable par les entrées basse fréquence des émetteurs-récepteurs 13 (Fig. 5).

Un circuit analogue au circuit 12 (non représenté), permet à la réception du signal sourni par les émetteurs-récepteurs 13 (Fig. 5), de séparer les deux paramètres "données - voie de parole " pour leur exploitation respective.

Le système embarqué à bord de chaque train suit en permanence le déplacement du convoi grâce à la détection du radar 11 (Fig.2) qui est fixé par exemple sous la caisse de la motrice 6 (Fig. 1).

Le radar Doppler 11 est constitué d'une source hyperfréquence à 9,9 GHz par exemple.

Il coopère avec le sol afin de fournir un signal permanent représentatif de la progression du convoi, et ponctuellement avec les balises passives grâce à l'écho desquelles, il permet au système suivant l'invention de localiser le convoi de façon précise.

La voie est composée d'une multitude de "réflecteurs" radar potentiels tels que les pierres du ballast, les tire-fonds, les traverses, les rails, etc.

Le faisceau du radar 11 n'étant pas ponctuel, plusieurs cibles sont illuminées simultanément et renvoient des signaux élémentaires dont les amplitudes et les phases sont variables. La combinaison de ces signaux élémentaires constitue le signal Doppler permanent lorsque le train se déplace.

Il est ensuite traité pour en extraire l'information de déplacement recherchée.

Une fraction du signal est transmise à l'antenne d'émission du radar. Une autre fraction de ce signal est transmise à un mélangeur (non représenté) et constitue une référence qui, mélangée au signal réfléchi par le sol, engendre un battement Doppler dont la période est proportionnelle au déplacement du radar.

C'est la même antenne qui émet et capte les signaux réfléchis par le sol.

L'ensemble de l'électronique du radar est intégré à l'intérieur d'un corps cylindrique 11a qui reçoit à une de ses extrémités la lentille 11b dirigée vers le sol suivant un angle prédéterminé, de 35° par exemple. Cette lentille focalise les signaux émis et reçus vers l'antenne huperfréquence.

Le traitement du signal de sortie du radar Doppler 11 consiste en un comptage des périodes Doppler lorsque le signal a une amplitude exploitable.

Lorsque le signal est trop faible, les périodes sont reconstituées en prenant comme référence les périodes précédentes, par un logiciel supporté par le microprocesseur 39 de la Fig.4.

Le radar 11 comporte avantageusement deux chaines identiques, mais déphasées de 90°. Il est possible de détecter le sens de marche du train en mesurant le déphasage relatif de ces deux voies par comptage dans un sens et décomptage dans l'autre sens; la position calculée est, dans ces conditions, correcte quelque soit le sens de marche.

Les dièdres constituant les balises sont quant à eux détectés par le radar 11 dont le signal, extrait de l'une des voies, est traité par les éléments 48,49 et 50 (Fig.4) . La sortie du redresseur de signal 50 étant destinée à délivrer un créneau représentatif de chaque dièdre.

Le profil de ces éléments mécaniques élémentaires forme un dièdre de 90° de telle sorte qu'un faisceau polarisé hyperfréquence venant le frapper avec un angle de 45° par rapport à son arête et un angle d'incidence géométrique confondu avec la bissectrice du dièdre, soit réfléchi avec une rotation de polarisation de 90°.

L'antenne de réception du radar 11 est également placée sous un angle de 90° par rapport à son antenne d'émission, de sorte qu'elle préférencie les rayons réfléchis par les dièdres, à l'exclusion des autrs réflexions générées par le ballast.

Le rapport signal/bruit de la transmission ainsi réalisée est fortement amélioré par rapport à une détection classique et garantit un très faible taux d'erreur.

Le calculateur 10 du dispositif embarqué est destiné à gérer les signaux issus du radar et les signaux à destination ou en provenance du système d'élission-réception 13 (Fig. 2).

Il reçoit l'information issue de la clé "vitesse limitée 17 à la disposition du conducteur et met à la disposition de ce dernier des informations sur la conduite (vitesse réelle, "vitesse objectif").

Le coeur du calculateur 10 est un microprocesseur à 16 bits, par exemple du type 68000 associé à des périphériques d'entrée-sortie.

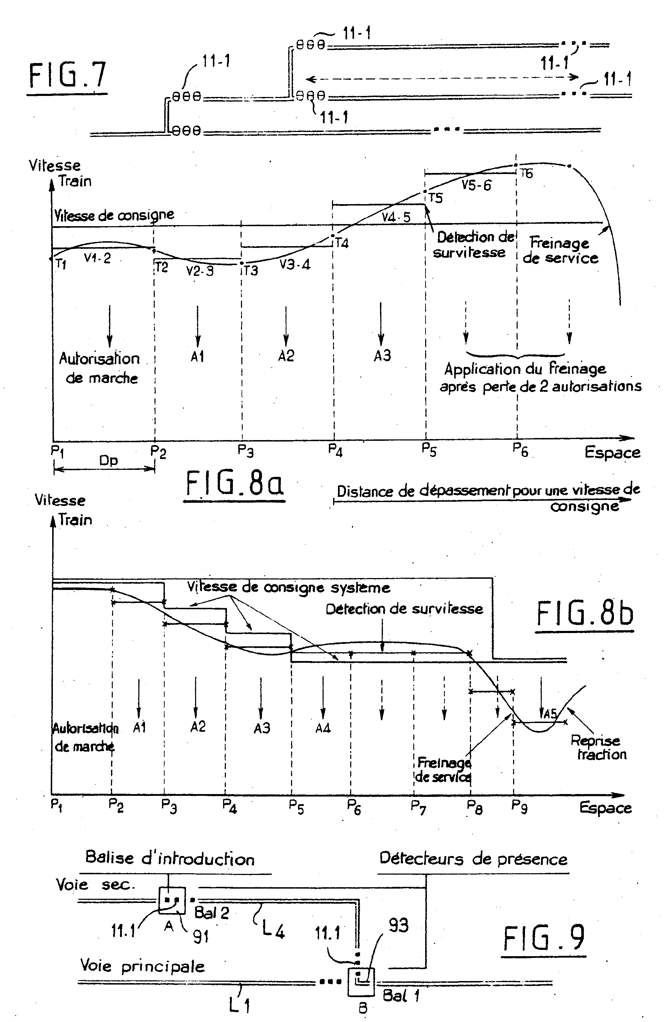

Le poste central 2 du système suivant l'invention est représenté plus en détail à la Fig.6.

Il comporte un calculateur central 70 connecté par l'intermédiaire d'un circuit d'interface "données-phonie" 71 à un émetteur-récepteur 72 connecté à l'antenne 8 (Fig. 1).

Le circuit 71 est identique en tous points au schéma 12 de la Fig.5, et réalise les mêmes fonctions pour le poste central.

Le calculateur central est en outre relié à un circuit d'interface et de modem 73 permettant au moyen d'une liaison filiaire ou phonique, au calculateur d'être informé de la position des appareils de voie.

Il est de plus relié à une console comprenant un clavier 74 et un dispositif d'affichage à écran 75, à une imprimante 76, à un dispositif de visualisation à haute résolution 77 à une mémoire à disque dur 78 et à un dispositif 79 d'enregistrement de sauvegarde.

Il est associé à un calculateur d'interface de commande 80 dont les sorties sont reliées à des circuits de commande de puissance.

Les circuits de commande de puissance 81 assurent la commande d'un panneau de visualisation 84 comportant des afficheurs numériques 85 et des voyants lumineux 86 jalonnant une reproduction graphique 87 du réseau.

Le fonctionnement du système va maintenant être décrit en référence aux divers organigrammes représentés au dessin.

Cependant, avant de décrire le fonctionnement proprement dit, on va indiquer ci-après un certain nombre de fonctions que doit réaliser le système.

Fonctions de localisation

Pour le calcul de la vitesse des trains, le poste central 2 dispose d'une base de temps qui est le temps de cycle entre deux réponses successives d'un même train (3 secondes par exemple).

Il est donc capable de déterminer par le calcul, la vitesse moyenne de chaque train sur une ligne.

Le poste central calcule une vitesse moyenne entre deux instants de scrutation des trains, qui forment un intervalle de temps In.

Les trains pouvant être soumis à une accélération positive ou négative pendant cet intervalle, il en résulte une certaine imprécision de mesure dont il y a lieu de tenir compte dans le respect des courbes de protection Vitesse = F (Espace)

Une estimation majorée de l'imprécision sur le calcul des vitesses est réalisée de la façon suivante.

Soient :

$T$ = Temps de cycle de scrutation de la position de chaque train, par le poste central 2;

$Vo$ = Vitesse instantanée du train à un instant O.

$Vr$ = Vitesse instantanée réelle du train soumis à une accélération $\Gamma$ pendant l'intervalle de calcul $T$.

$Vc$ = Vitesse moyenne pendant le temps $T$, calculée par le poste central 2.

$Xo$ = Position du train à l'instant O (celle que reçoit le poste central)

$XT$ = Position du train à l'instant T (celle que reçoit le poste central)

$\delta$ = Erreur de calcul de la vitesse par le poste central à l'instant T.

$$\delta = \left| (Vr - Vc) \right| \quad (1)$$

Le poste central calcule la vitesse en appliquant la relation :

$$Vc = \frac{XT - Xo}{T} \quad (2)$$

On peut écrire :

$$XT = 1/2\,\Gamma\,T^2 + Vo\,T + Xo \quad (3)$$

En combinant les relations (2) et (3), on obtient :

$$Vc = 1/2\,\Gamma\,T + Vo \quad (4)$$

Or la vitesse réelle du train soumis à l'accélération est :

$$Vr = \Gamma\,T + Vo \quad (5)$$

Les relations (1), (4) et (5) fournissent la valeur recherchée de l'erreur maximale d'appréciation de la vitesse du train par le poste central 2.

$$\delta \; = \; 1/2 \; \Gamma \; T$$

A titre d'exemple, on donne une application numérique de détermination de l'erreur de vitesse calculée.

Sachant que l'accélération d'un train n'est jamais supérieure à 1 m/s$^2$ et en supposant que T = 3s, la vitesse calculée est sousestimée de = 1 ,5 m/s soit 5,4 km/h.

Afin d'éviter l'accroissement de la marge d'incertitude sur l'espace mesuré due aux erreurs cumulatives, le système a recours à des éléments fixes disposés sur la voie.

Ce sont les balises formées de dièdres 11-1 disposées sur la voie et déjà décrites en référence à la Fig.2.

Ces diédres sont disposés en groupes, chaque groupe formant un code que le train déchiffre à son passage.

Le train ajoute ce code à son prochain message de progression qui apporte au poste central l'une des trois informations suivantes.

- Repositionnement par rapprochement du code reçu et du code décrit dans les fichiers géographiques de la ligne, permettant de corriger les erreurs dues à l'imprécision de l'odomètre.
- Levée de doute à chaque aiguillage, sur l'itinéraire effectif du train.
- Inhibition spatiale du freinage de service pour permettre sous certaines conditions le franchissement des tunnels et des zones d'ombre connues de la transmission hertzienne.

La précision des radars odomètres tels que le radar 11 (Fig.2) étant de l'ordre de 1/1000 et la résolution désirée concernant la position transmise par les trains étant de 10 m, la distance Dmax qui doit séparer deux groupes successifs de dièdres de repositionnement est telle que Dmax. 1/1000 < 10 m.

Ce qui donne : Dmax = 10 km

Sur la Fig.7, on a donné un exemple de répartition de groupes de dièdres 11-1 sur une portion de ligne ferroviaire.

Deux groupes de dièdres sont disposés au niveau de chaque aiguillage et assurent la levée d'indétermination sur l'itinéraire emprunté par un train tandis que des groupes de dièdres de repositionnement sont disposés le long de chaque ligne à intervalles réguliers de 10 km par exemple.

Pour contrôler le bon fonctionnement de l'odomètre et s'assurer de la validité des messages reçus le poste central du système effectue en permanence un contrôle de cohérence par une analyse récurrente effectuée à des intervalles de temps prédéterminés, par exemple toutes les trois secondes.

Soient $X_n$, $V_n$ et $X_{n+1}$, $V_{n+1}$, les positions et les vitesses du train respectivement aux instants $t_n$ et $t_{n+1}$.

La position exacte du train est connue de manière sûre aux points de repositionnement matérialisés par les dièdres 11-1.

Connaissant la position $X_n$ et la vitesse $V_n$ du train ainsi que l'intervalle de temps $In=t_{n+1}-t_n$ et compte tenu des performances dynamiques du train à la vitesse considérée, le poste central en déduit une plage dans laquelle doit se trouver la valeur $X_{n+1}$.

Si la valeur reçue n'appartient pas à la plage précitée, le système de mesure est considéré comme défaillant et le poste central prend les mesures de sécurité qui s'imposent.

Le poste central a en mémoire la description du réseau, et notamment la position des dièdes. Il prévoit pour chaque train, la plage où doit se produire le repositionnement.

Si au-delà de cette plage, l'événement n'a pas lieu, le poste central détecte une incohérence et engage les restrictions adéquates.

## Fonctions de protection

La protection de la marche d'un train est assurée de la façon suivante.

Le poste central vérifie en permanence si un train n'est pas en survitesse. Pour cela, il dispose d'une table espace-vitesse lui permettant pour chaque niveau de vitesse de connaître l'espace minimum autorisé avant le freinage de service. Dans ces conditions, le système assure une protection mobile et déformable lui permettant de garantir la sécurité par rapport :

- à la position de ses encadrants immédiats (Anti-collision).
- aux points de ralentissement et d'arrêt dont il possède les caractéristiques en mémoire. Ces dernières peuvent à tout moment être modifiées par simple programmation.

Dès qu'il juge une situation comme critique, l'action du poste central consiste à ne pas inclure, dans son message, le numéro du train ou des trains en survitesse, ce qui entraîne l'application du freinage de service.

L'électronique embarquée n'autorise le train à rouler que si elle s'identifie par reconnaissance de son numéro dans le mes sage cyclique émis par le poste central.

Dans le souci de réduire les procédures de freinages intempestifs qui pourraient être causées par des conditions de transmission radioélectrique passagèrement défavorables, le système choisit d'attendre la réception de deux messages successifs provenant du poste central ne contenant pas le numéro du train considéré, pour engager un freinage de service.

Toute non-identification au-delà d'un "chien de garde" légèrement supérieur au temps de rafraîchissement entraîne, lorsqu'elle est répétée deux fois de suite, un freinage de service.

P étant la probabilité qu'un message émis ne parvienne pas à son destinataire -- P est fonction de la qualité de la transmission sur le réseau, et ne peut être connue que statistiquement --, la probabilité de freinage intempestif du train est, par cet artifice, ramenée à $P^2$ (si cette probabilité était encore trop importante, il faudrait choisir $\alpha$ tel que $P\alpha < \beta$, où $\beta$ serait le seuil de probabilité admissible de freinage de service non requis).

Il découle de cette dernière disposition, un temps de retard à l'établissement du freinage F, qui est pris en compte par le poste central dans le calcul des courbes de protection de chaque train.

Ce temps de retard est égal à 2.T et s'ajoute au temps de retard dû à la réponse des éléments mécaniques.

Le suivi et la protection du train sont assurés de la manière décrite en référence aux Fig.8 et 9.

Le poste central connait, dans une fourchette de tolérance qui est fonction du cycle de rafraichissement, l'état du réseau dans ce qu'il a de variable : la position réelle de chacun des trains sur le réseau.

L'ordinateur détient également la description du réseau dans ce qu'il a de fixe (infrastructures géographiques, caractéristiques essentielles des trains), et dans ce qu il a de modifiable (l'aiguillage ou la composition des trains).

Dans ces conditions, le calculateur dispose de tous les éléments nécessaires pour assurer la protection du réseau.

Chaque train est identifié par son numéro, et le calculateur vérifie en temps réel que sa vitesse ne dépasse pas la vitesse de consigne autorisée sur le tronçon qu'il occupe.

Le mode de contrôle est représenté à la Fig.8b sur laquelle la vitesse de consigne est représentée par une ligne horizontale continue, tandis que la vitesse réelle du train est représentée par des segments d'une durée égale à la durée T d'un cycle de contrôle donnant la valeur moyenne de la vitesse réelle au cours de chacun des cycles. Cette vitesse moyenne est celle que détermine par le calcul le poste central 2.

La vitesse réelle proprement dite est représentée par une courbe continue coupant chacun des segments de vitesse moyenne.

Pour un train donné, à chaque réception d'un message du train, le calculateur du poste central calcule la vitesse du train et vérifie que sa valeur est inférieure à la vitesse de consigne Vc :

$$D_p/T + \delta < V_c$$

où $\delta$ est, comme antérieurement expliqué, une majoration de l'erreur inhérente au principe de détermination de la vitesse par le poste central 2.

Dans ce cas, le calculateur autorise l'émission du numéro du train qui est autorisé à poursuivre sa marche.

Le contrôle du ralentissement est illustré à la Fig. 8b.

Sur cette figure, la vitesse de consigne est représentée par des échelons successifs de valeurs décroissantes situés à l'intérieur d'une courbe à un échelon représentant l'encadrement de vitesse théorique.

La décroissance de ces échelons suit préférentiellement une loi parabolique qui s'avère être la loi de freinage la plus naturelle. A décélération constante, la courbe Espace = F (vitesse) est une parabole.

A l'approche d'un ralentissement, la vitesse de consigne diminue progressivement. Il est toutefois nécessaire d'anticiper le ralentissement pour tenir compte de la durée d'interrogation de tous les trains. Ceci a pour effet de réduire légèrement les performances de la ligne en obligeant le conducteur à ralentir avant la prise normale du freinage.

Un dispositif de préannonce visuel et sonore de la vitesse "objectif" facilite la conduite en évitant les déchenchements intempestifs du freinage de service.

La parabole de freinage, calculée pour une vitesse donnée en fonction des caractéristiques du train, est rallongée de la distance X, parcourue pendant deux temps de cycle.

Cette valeur spatiale X, équivaut au parcours que peut effectuer un train qui partant de la vitesse de consigne supérieure, serait en phase d'accélération maximale pendant 2 T.

En cas de survitesse, le poste central stoppe l'émission du numéro du train considéré et celui-ci est freiné en freinage de service jusqu'à ce que sa vitesse soit redevenue inférieure à la vitesse de consigne.

Le calculateur du poste central autorise à nouveau l'avance du train et le contrôle de celui-ci par réémission de son numéro est rendu au conducteur.

Les consignes de vitesse s'entendent pour l'ensemble des configurations du réseau, y compris tracés d'itinéraires, arrêts impératifs, etc...

Les caractéristiques de chaque train étant connues du poste central, l'ensemble de ces vitesses espaces de protection et distances d'arrêt sont adaptés en conséquence pour chaque train.

Le calculateur prend également en compte l'ensemble des temps de retard pur entre la transmission et l'application effective de l'effort de freinage propre à chaque type d'appareil.

## Introduction d'un mobile dans le système.

L'entrée d'un train sur une voie gérée par le système est illustrée par le schéma de la Fig. 9 sur laquelle on a représenté une voie principale L1 et une voie secondaire L4.

Sur la voie principale, au niveau de l'aiguillage est prévu un groupe de dièdres 11- 1.

Sur la voie secondaire un groupe 11-1 de dièdres d'introduction associé à un détecteur de présence de train 91 est placé en amont de l'aiguillage.

Au niveau de l'aiguillage un autre groupe de dièdres 11-1 est associé à un détecteur de présence 93.

Les détecteurs de présence peuvent avantageusement être constitués d'un câble posé le long des rails de chaque côté de la voie de manière à réaliser une boucle. En l'absence de train, le circuit est accordé et autorise le fonctionnement d'un oscillateur de sécurité.

Lors du passage d'un convoi, la masse métallique de l'ensemble désaccorde le circuit oscillant et autorise la détection.

Le poste central connait l'état de la voie principale L1 , et notamment de l'occupation des zones d'approche encadrant le point d'intersection .

En conséquence, il détermine <u>de façon permanente</u> si un mobile en provenance de la ligne secondaire L4 peut poursuivre son itinéraire, et s'introduire sans risque sur la voie principale, puis en informe le conducteur en transmettant à l'organe de visualisation de l'information de vitesse "objectif".

La vitesse "objectif" "O" est visualisée au rouge en cabine de conduite si les conditions d'introduction ne sont pas satisfaites.

Un niveau de vitesse " objectif " est à contrario affiché en cabine de conduite lorsque toutes les conditions sont réunies pour introduire le train en toute sécurité.

L'état d'occupation de chaque détecteur 91 et 93 (Fig. 9) est transmis cycliquement vers le poste central par le même moyen que celui utilisé par les trains ou par liaison filaire spécialisée.

Associés aux dièdres, le rôle de ces détecteurs est d'informer le poste central des intentions d'un mobile de s'insérer sur la ligne principale ou de la quitter.

Dès lors que le poste central est informé, grâce au détecteur 91 (Fig. 9) de la présence d'un train, il doit recevoir durant les cycles d'interrogation suivants, le numéro d'identification du train détecté ainsi que le numéro de balise vu par le train.

La réception du numéro du train est adjointe, par le poste central 2, à sa table d'identification des mobiles en service sur la voie principale et le numéro de balise lui permet de situer, au sein de ses tables géographiques, la position exacte du train.

Si le dialogue poste central <--> détecteur et poste central <--> train ne s'établit pas dans les conditions requises comme précédemment décrites, le train est considéré comme défectueux et ne sera pas autorisé par le poste central à s'introduire sur le réseau.

Le conducteur est informé de cette situation grâce à son bloc de visualisation, toutes dispositions pouvant être prises par la voie phonique afin d'assurer le dépannage du train considéré avant son introduction sur la voie principale.

Si le dialogue s'établit dans les conditions requises, le train reçoit duposte central la vitesse "objectif" "0" dansle cas d'une attente d'introduction, ou la vitesse "objectif" correspondant à la vitesse d'introduction tolérée si l'état d'occupation de la voie principale le permet.

Le conducteur est informé de ces niveaux de vitesse "objectif" par son bloc de visualisation.

Le détecteur 93 et la balise 11-1 qui lui est associée permettent l'établissement d'un dialogue avec le poste central 2, informant ce dernier que l'introduction effective du train dans la voie principale.

Lorsqu'un train sort du réseau supervisé par le système, il n'est plus géré par celui-ci dès que le poste central a détecté son passage au niveau du détecteur 91 placé en A sur la ligne secondaire L4 de la Fig.9.

Dès lors, le poste central l'exclue de ses tables dans les calculs de protection, et il peut poursuivre librement sa marche, l'inhibition spatiale du freinage de service étant assurée par la balise 11-1 disposée en A.

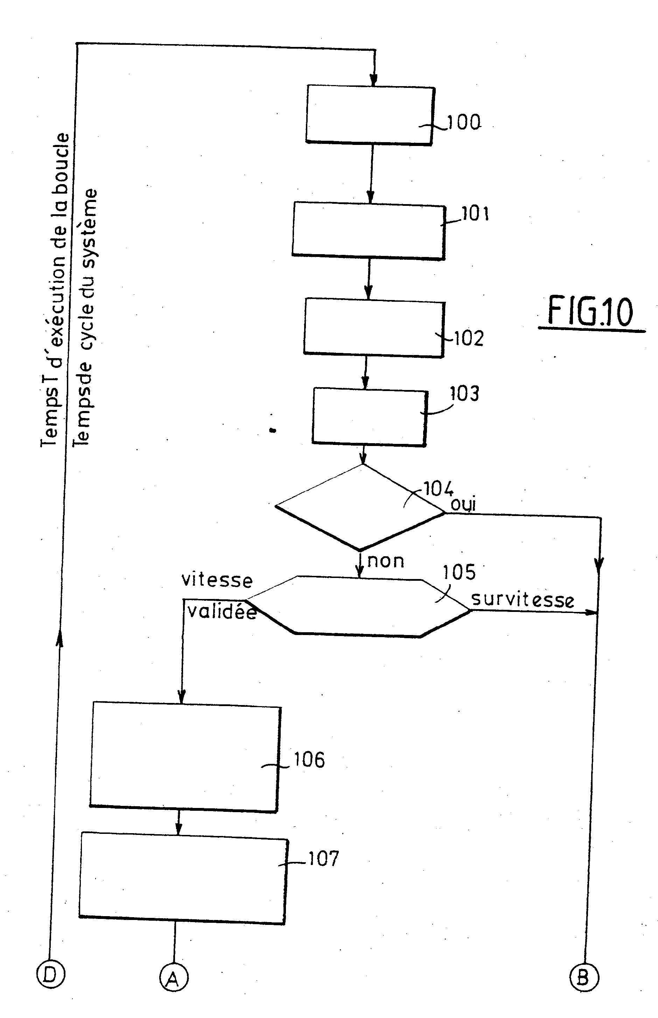

Le fonctionnement du système va maintenant être décrit en référence aux organigrammes des Fig. 10 à 16.

## Au poste central 2 :

En se référant tout d'abord à la Fig.10 au cours de la phase 100, on demande au poste central 2 de procéder au traitement des informations pour chacun des trains 1 à n se trouvant sur le réseau géré par le système.

Au cours de la phase 101 , il y a lecture de la position du train N°i : Posi(t) avec $1 \leqq i \leqq n$.

Posi(t) étant la position du train i à l'instant.

Au cours de la phase 102, il y a calcul de la vitesse du train i par la relation :

$$\left| \frac{posi(t) \ - \ Posi\,(t-T)}{T} \right|$$

dans laquelle T est le temps de cycle de scrutation de la position de chaque train par le poste central 2.

Au cours de la phase 103, le poste central procéde aux contrôles de cohérence, c'est à dire au contrôle que pour chacun des trains considéré, la position reçue à l'instant t se situe dans une plage prédéterminée, calculée à partir de la position à l'instant t-T et compte tenu des performances dynamiques du train.

Au cours de la phase 104, il y a vérification de la détection d'une incohérence du message de position reçu du train considéré.

Dans la négative, le poste central entame la phase 105 de comparaison de la vitesse du train aux constantes du réseau qui sont l'encadrement et la vitesse théorique se trouvant en mémoire dans le poste central.

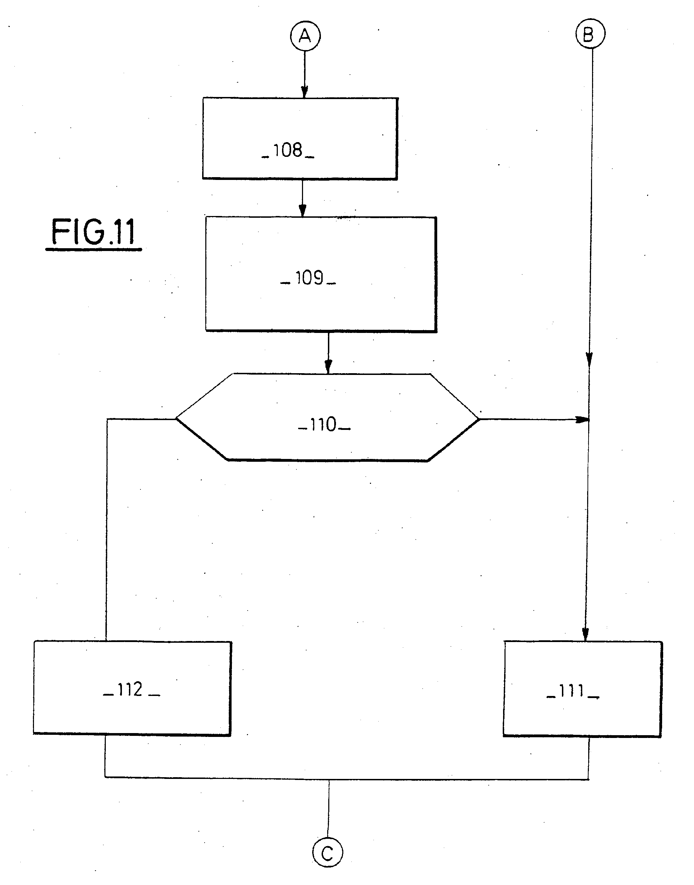

Si une incohérence a été détectée,le train n'est plus autorisé à rouler, et on passe à une phase qui sera décrite en référence à la Fig. 11.

Si au cours de la phase 105, il est constaté que la vitesse du train est correcte vis à vis des contraintes constantes du réseau, le poste central procède au cours de la phase 106 à la lecture de la table d'état des paramètres du réseau tels que la position des appareils de voie, les arrêts programmés aux stations.

Puis au cours de la phase 107, le poste central 2 recherche dans la table d'état des éléments variables du réseau, la position des deux trains encadrant le train considéré avec intégration de la longueur du train qui précède le train N° i.

Si au cours de la phase 105, le poste central 2 a constaté que le train considéré est en survitesse, le train n'est plus autorisé à rouler, et le poste central 2 passe à la phase évoquée plus haut, qui sera décrite en référence à la Fig. 11.

A l'issue de la phase 107, le poste central 2 passe à la phase 108 de la partie de l'organigramme représentée à la Fig. 11 au cours de laquelle le poste central 2 recherche parmi les éléments paramétables et variables, celui le plus restrictif pour la progression du train N° i.

Au cours de la phase 109, le poste central 2 calcule la distance minimale D min :

- d'arrêt du train si l'élément le plus restrictif est un point d'arrêt.
- de ralentissement si l'élément le plus restrictif est une nouvelle consigne de vitesse plus faible.

Au cours de la phase 110, le poste central 2 vérifie si la distance minimale Dmin, augmentée d'un espace tampon de sécurité, prenant notamment en compte l'erreur de mesure de l'esapce par l'odomètre, est supérieure ou égale à la distance séparant le train de l'élément le plus restrictif.

En d'autres termes, on vérifie si par rapport aux restrictions les plus immédiates, le train, compte tenu de ses performances et de la nature de la voie à cet instant, a atteint un point Espace-Vitesse critique impliquant un processus de freinage de service Fs.

Si oui, le train n'est plus autorisé à rouler et le poste central 2 passe à la phase 111 de suppression du numéro du train devant impérativement freiner en freinage de service dans la table TAUT des trains autorisés à rouler.

Cette phase est également activée dans le cas de réponses positives obtenues à l'issue des phases 104 et 105 de la partie de l'organigramme représenté à la Fig. 10.

Si au cours de la phase 110, il est établi que la distance minimale Dmin est inférieure à la distance séparant le train de l'élément le plus restrictif, le poste central 2 passe à la phase 112, d'autorisation du train à rouler par rangement de son numéro d'dentification dans la table TAUT des trains autorisés à rouler.

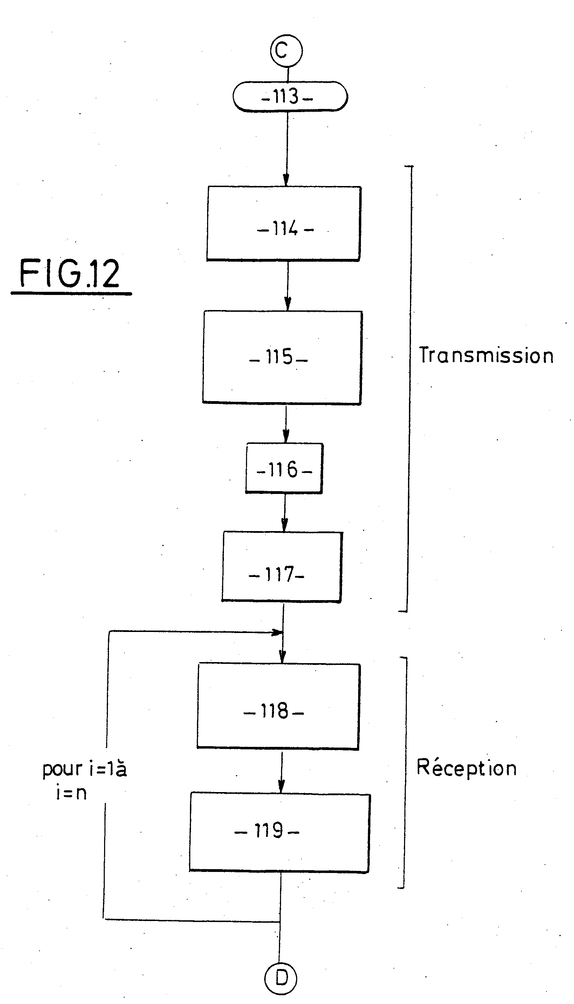

Au cours de la phase 113 de la partie de l'organigramme représentée à la Fig. 12, le poste central 2 se prépare à procéder à l'émission-réception VHF du message vers les trains en circulation.

A cet effet, au cours de la phase 114, il y a lecture de la table TAUT des trains autorisés à rouler dans la mémoire du calculateur 70 du poste central 2.

Ensuite, au cours de la phase 115, il y a composition par le poste central 2 du message à destination du réseau.

Ce message contient :

- les numéros d'identification de tous les trains autorisés à rouler.
  6 bits suffisent pour identifier les trains.
- la vitesse de consigne de chaque train, à destination du conducteur.
  4 bits suffisent permettant ainsi de fournir une indication de "vitesse objectif" par pas de 10 km/h, de 0 à 160 km/h.
- l'identification du canal de transmission réservé à chaque train en fonction de sa position sur le réseau et de la tranche de temps qui lui est réservé au sein de ce canal.

6 bits suffisent pour élaborer ces informations.

Par conséquent, un message de 16 bits est destiné à chaque train.

Le contrôle d'erreur est appliqué sur le message global, tous trains confondus.

La phase 116 est une phase de temporisation permettant d'ajuster le temps global du cycle de fonctionnement.

Le message du poste central est transmis au cours de la phase 117.

Au cours de la phase 118 qui est l'une des phases de réception, il y a lecture du coupleur de liaison série, pour extraire les messages émis par chaque train.

Au cours de la phase 119, il ya a rangement de la position de chaque train dans la table de position des trains.

Les phases 118 et 119 sont répétées pour les trains :

$$i = 1 \text{ à } i = n$$

Ensuite, le cycle d'opérations décrit ci-dessus est recommencé. Le temps d'éxécution de la boucle ou temps de cycle du système est égal à T.

Dans l'équipement embarqué :

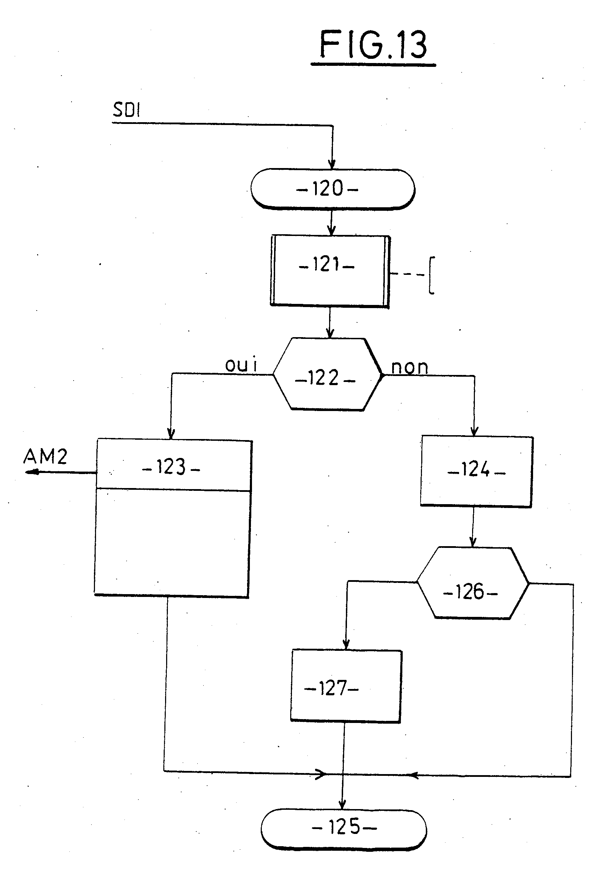

Sur la Fig. 13, on a représenté l'organigramme de traitement des signaux provenant des dièdres 11-1 au sol.

L'application à l'unité centrale 10 de signaux SDI provenant du redresseur de signal 50 du circuit de la Fig.4 provoque une phase d'interruption 120.

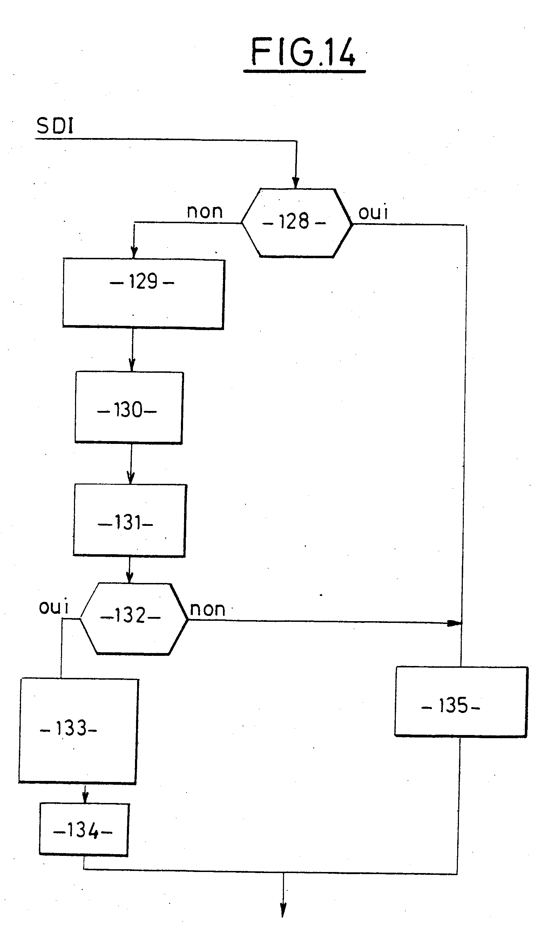

Cette phase est suivie d'une phase 121 d'acquisition et de reconnaissance du message formé par les dièdres au sol constituant une balise, et qui sera expliquée en référence à la Fig. 14.

Au cours de la phase 122, on détermine si le message est destiné à la chaine spatiale.

Dans l'affirmative (balise en entrée de tunnel ou zone d'ombre), on passe à la phase 123 d'activation de la chaine spatiale et, d'émission d'un signal AM2 vers le freinage de service 16 (Fig.3) , autorisant la marche du train et de remise à zéro d'un compteur logiciel d'espace C2 associé à la chaine spatiale.

Dans la négative, on est en présence d'un message provenant de balises 11-1 de repositionnement géographique.

Au cours de la phase 124, il y a remise à zéro d'un compteur logiciel C1 d'espace parcouru, puisque cet espace est mesuré relativement à ces balises.

A l'issue de la phase 123, on passe directe ment à la fin d'interruption 125.

A l'issue de la phase 124, on détermine au cours de la phase 126, la nature de la balise ayant engendré le message.

Si c'est une balise de repositionnement, on passe directement à la phase 125 de fin d'interruption.

S'il s'agit d'une balise aux points d'aiguillage, on passe à la phase 127, de mise en mémoire du numéro de cette balise dans la mémoire MEM 1 de l'unité centrale 10 en vue de sa transmission ultérieure vers le poste central 2. Puis vient la phase 125 de fin d' interruption.

Sur la Fig. 14, est représenté l'organigramme d'acquisition et de reconnaissance des messages formés par les dièdres au sol en vue de l'identification d'une balise.

A la réception d'un message SDI formé par chaque dièdre au sol 11-1 , provenant du circuit de traitement de la Fig.4, il y a détermination au cours de la phase 128, si la variable représentant l'espace inter-dièdres EID est nulle.

Si cette variable n'est pas nulle, on lui attribue, au cours de la phase 129, une valeur qui est la différence entre l'espace parcouru en cet instant et sa valeur précédente qui est l'espace parcouru lors de l'interruption due au dièdre précédent (voir phase 135).

Cette différence constitue l'espace interdièdres EID auquel on associe au cours de la phase 130, un étant binaire.

Au cours de la phase 131, on construit un mot binaire par juxtaposition à chaque interruption des états binaires précédents.

Au cours de la phase 132, on vérifie que le mot binaire est complet.

Si le mot est complet, la phase 133 analyse si ce mot appartient à la table des balises en mémoire, et au cours de la phase 134, on remet à zéro la variable EID, pour se préparer à recevoir ultérieurement une nouvelle balise.

Si au cours de la phase 128, il s'avère que la variable EID est égale à zéro, cela signifie que le train vient de rencontrer le premier dièdre de la balise et la variable EID est directement initialisée à la valeur de l'espace parcouru au cours de la phase 135.

Tel est également le cas si au cours de la phase 132 il a été établi que le mot binaire n'est pas complet.

11

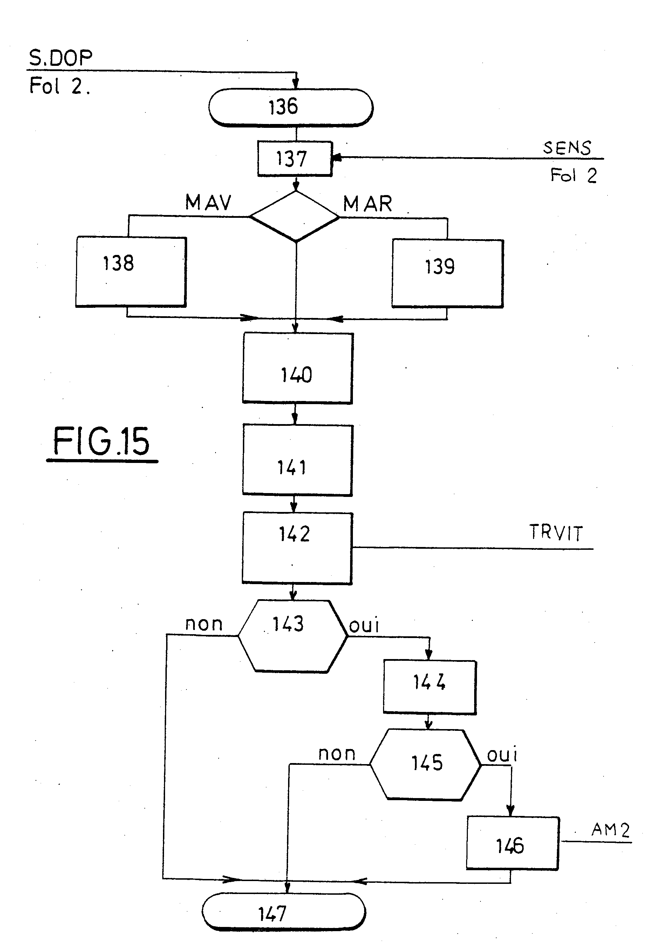

Le traitement du signal doppler est illustré par l'organigramme de la Fig. 15.

Le signal doppler numérisé apparaissant à la sortie du circuit d'interface 53 du circuit de la Fig.4 provoque une phase d'interruption 136.

Ensuite, au cours de la phase 137, on procède à la lecture du sens de la marche du train, en utilisant le signal de sens généré par le circuit d'interface 55 du circuit de la Fig.4.

Dans le cas d'une marche avant, il y a au cours de la phase 138, incrémentation du compteur logiciel C1 d'espace parcouru relativement à la dernière balise rencontrée et initialisé au cours de la phase 123 (Fig. 13).

Dans le cas d'une marche arrière, il y a au cours de la phase 139, décrémentation du compteur logiciel C1.

Ces deux phases sont suivies d'une phase 140 de stockage de l'état du compteur logiciel C1 dans une mémoire (MEM2) de l'unité centrale 10.

Puis au cours de la phase 141, il y a formation du message MESVHF : MEM1 + MEM2 + CODE DETECTEUR D'ERREUR qui sera ultérieurement transmis au poste central.

Au cours de la phase 142 suivante, il y a calcul de la vitesse réelle du train et transmission du signal TRVIT à l'interface 30 (Fig. 3), pour visualisation de cette information sur le poste 15 (Fig.2) à disposition du conducteur.

Au cours de la phase 143, il y a détermination si la chaine spatiale est active.

Si oui, il y a au cours de la phase 144 incrémentation du compteur d'espace C2.

Puis au cours de la phase 145, il y a vérification si le contenu du compteur logiciel C2 est égal à la longueur de la chaîne, (cette longueur étant constante et prédéfinie).

Si oui, il y a au cours de la phase 146, forçage du signal AM2 à O, la chaîne spatiale n'émettant plus d'autorisation de marche ("quota" d'espace épuisé).

Si non, on passe à la phase 147 de fin d'interruption, phase à laquelle on passe également directement si la chaîne spatiale s'avère inactive au cours de la phase 143.

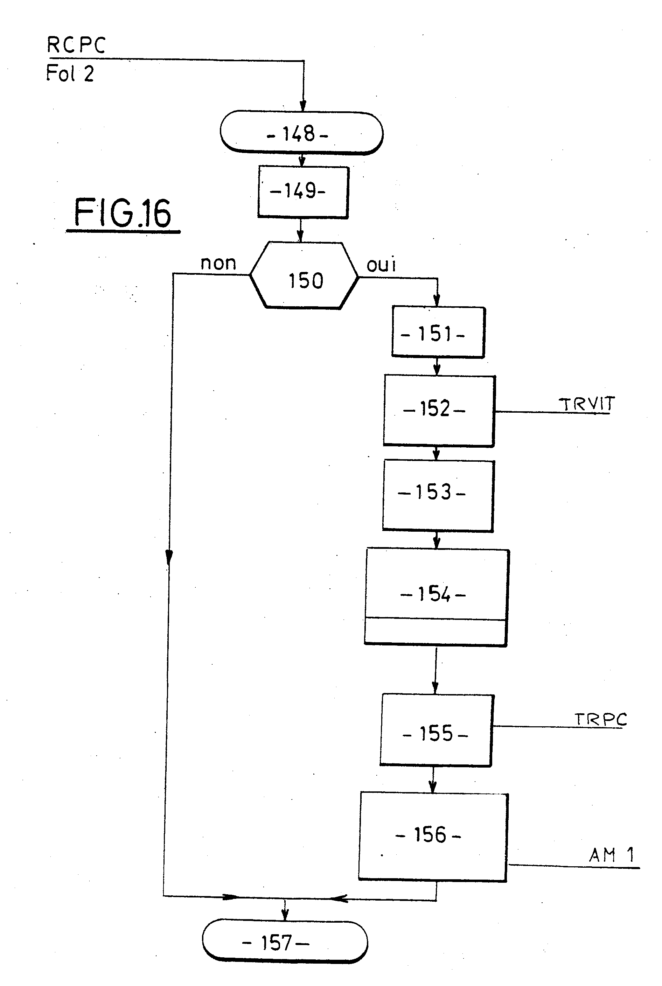

Le traitement des messages VHF en provenance du poste central 2 va être décrit en référence à l'organigramme de la Fig. 16.

La réception d'un message RCPC en provenance du poste central par le circuit d'interface 12 du circuit de la Fig.3 provoque une phase d'interruption 148 suivie d'une phase 149 de lecture du message reçu.

Au cours d une phase 150, il y a recherche du numéro du train considéré au sein du message reçu.

Si le numéro du train est contenu dans le message, on passe à la phase 151 de lecture de la "vitesse objectif", puis à la phase 152 de transmission de la "vitesse objectif" à l'interface 30 (Fig.3) sous la forme du signal TRVIT, pour visualisation de cette information sur le poste 15 (Fig.2) à destination du conducteur.

Ensuite, il y a au cours de la phase 153, remise à zéro d'un compteur logiciel C3 de messages non reçus en provenance du poste central et au cours de la phase 154 activation de la chaine temporelle et lancement du chien de garde 51 (Fig. 4).

Au cours de la phase 155, il y a transmission du message MESVHF à l'interface 12 (Fig.3) et emission de celui-ci sous la forme du signal TRPC vers le poste central 2.

Au cours de la phase 156, il y a maintien du signal "autorisation de marche AM1 = 1" appliqué au circuit de freinage de service 16 (Fig.3), puis passage à la phase 157 de fin d'interruption.

Si le message du train considéré n'est pas dans le message reçu du poste central, cela signifie que le poste central n'autorise plus le train à rouler et il y a passage direct de la phase 150 à la phase 157 de fin d'interruption.

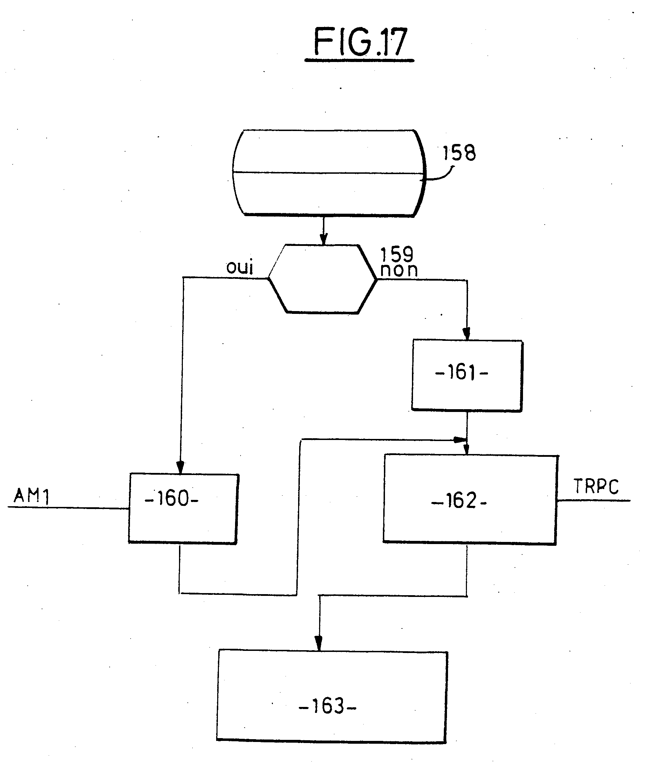

L'organigramme de la Fig. 17 illustre le traitement du chien de garde.

L'échéance du chien de garde provoque une phase d'interruption 158 signifiant que la chaine temporelle est épuisée.

Lorsque la chaine temporelle est épuisée, on détermine au cours de la phase 159 si le contenu du compteur logiciel C3 de messages non reçus est égal à 2.

Si oui, il y a au cours de la phase 160 forçage du signal AM1 à 0 et en conséquence émission d'une instruction de freinage vers le circuit 16 de freinage de service 16 (Fig. 3).

Si non, il y a incrémentation du compteur C3 au cours de la phase 161 et au cours de la phase 162, également successive à la phase 160, transmission du message MESVHF à l'interface de transmission série 12 (Fig.3) sous la forme d'un signal TRPC vers le poste central 2.

La phase 162 est suivie d'une phase 163 de réarmement du chien de garde pour l'émission du prochain message VHF : MESVHF et forçage du signal AM1 à "O" si deux messages successifs en provenance du poste central ne contenaient pas de numéro d'identification du train.

Ce message est émis après réception d'un message du poste central (voir Fig. 16) ou à l'échéance de la temporisation si le train ne reçoit plus de message du poste central 2.

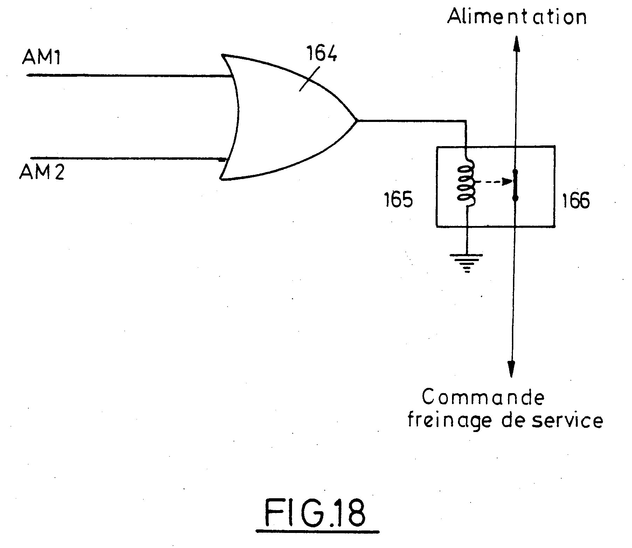

Sur la Fig. 18, on a représenté un mode de réalisation du circuit de freinage de service 16 de la Fig.3.

Il comporte une porte OU 164 dont les entrées reçoivent les signaux AM1 et AM2 de l'adaptateur d'interface 24 (Fig.3) et dont la résultante logique fournit un signal de commande du bobinage 165 d'un relais 166 connecté dans le circuit d'alimentation de moyens de commande de freinage de service non représentés.

## Revendications

1. Système de commande de la progression de plusieurs convois ferroviaires sur un réseau, chaque convoi étant équipé d'un dispositif embarqué (11) de détection de la position du convoi par rapport à la voie et de moyens d'émission-réception (7,13) communiquant avec un poste central (2) , ledit poste central comprenant des moyens (70) de mémorisation instantanée des positions relatives, de tous les convois sur le réseau, des moyens (78) de mémorisation des itinéraires de chaque convoi ainsi que des caractéristiques du réseau liées à l'encadrement de vitesse, et des performances des matériels roulants en service, caractérisé en ce que ledit poste central constitue l'organe d'initiative du système et comporte des moyens (72,8) d'émission à intervalles de temps réguliers, de messages contenant les numéros d'identification des convois en circulation qui sont autorisés à poursuivre leur route, compte tenu des informations de position reçues de ces convois par le poste central (2) et des paramètres d'encadrement de vitesse contenus dans les moyens de mémorisation (78) et en ce que le dispositif embarqué de chaque convoi constitue l'organe d'éxécution du système et comporte des moyens (10) de reconnaissance du numéro d'identification du convoi auquel il est associé et de moyens (16) de commande de l'arrêt du convoi en l'absence du numéro d'identification dans le message qu'il reçoit du poste central (2).

2. Système suivant la revendication 1, caractérisé en ce que le poste central (2) comporte un calculateur central (70) dont la mémoire vive constitue les moyens de mémorisation instantanée des positions relatives de tous les convois sur le réseau, et des éléments paramétrables de ce réseau, ledit calculateur central (70) étant connecté par l'intermédiaire d'un circuit (71) d'interface de"données-phonie" à un émetteur-récepteur (72) associé à une antenne (8) de communication avec les dispositifs embarqués des trains circulant sur le réseau, à une mémoire à disques dur (78) de mémorisation, des itinéraires de chaque convoi, des caractéristiques du réseau liées à l'encadrement de vitesse et des performances des matériels roulants en service.

3. Système suivant la revendication 2, caractérisé en ce que le poste central (2) comporte en outre un calculateur d'interface de commande (80) connecté au calculateur central (70), des circuits (81) de commande de puissance reliés audit calculateur de commande de puissance (80) et un panneau de visualisation (84) à afficheurs numériques (85), pourvu de voyants lumineux (86) jalonnant une reproduction graphique du réseau (87)

4. Système suivant l'une des revendications 1 à 3, caractérisé en ce que le dispositif embarqué sur chaque train comporte un calculateur de bord (10) connecté d'une part à un radar doppler (11) de détermination du déplacement du train par rapport à la voie qu'il parcourt, et d'autre part aux moyens d'émission-réception (13) par l'intermédiaire d'un circuit d'interface d'insertion de données numériques modulées dans un canal phonique (12), ainsi qu'à un équipement phonique (14) destiné au conducteur.

5. Système suivant la revendication 4, caractérisé en ce que le radar doppler (11) est relié au calculateur de bord (10) par l'intermédiaire d'un circuit d'interface (18) de traitement des signaux radar et d'un circuit d'interface parallèle (24) également relié au circuit (16) de commande de freinage de service.

6. Système suivant l'une des revendications 4 et 5, caractérisé en ce que le calculateur de bord (10) est relié par un bus (29) à un circuit (30) d'interface de transmission série vers un poste de visualisation (15) à la disposition du conducteur.

7. Système suivant l'une des revendications 5 et 6, caractérisé en ce que le circuit (18) d'interface de traitement des signaux radar comporte une première entrée (19) connectée à un microprocesseur (39) par l'intermédiaire d'un filtre passe-bas (35) d'un amplificateur à gain variable (36) et d'un convertisseur analogique-numérique (37) , une seconde entrée (20) déphasée de 90° par rapport à la première, connectée au microprocesseur (39) par l'intermédiaire d'un filtre passe-bas (40), d'un amplificateur à gain variable (41) et d'un convertisseur analogique-numérique (42), les bus de liaison (38,43) de la première entrée (19) et de la seconde entrée (20) au microprocesseur (39) se rejoignant en un bus de données commun, ledit microprocesseur (39) étant commandé par un circuit logique d'interruption (46) associé à une horloge

EP 0 388 272 B1

programmable (45) reliée au bus de données (44) et étant connecté par ses sorties à un premier circuit d'interface (53) de génération d'un signal doppler numérisé (S.DOP) et à un second circuit d'interface (55) de génération d'un signal de sens du train.

8. Système suivant la revendication 7, caractérisé en ce que le circuit (18) d'interface de traitement des signaux radar comporte en outre une voie (48,49,50) connectée à la seconde entrée (20) du circuit et destinée à délivrer un signal (SDI) qui est le signal radar réfléchi par des éléments de balises passives (11-1) disposées sur la voie et transformé en un signal en créneau correspondant à chaque élément de balise rencontré.

9. Système suivant la revendication 8, caractérisé en ce que les éléments de balises (11-1) sont constitués par des dièdres réfléchissant les signaux radar, disposés sur la voie.

10. Système suivant la revendication 9, caractérisé en ce que les balises passives sont constituées par des groupes de dièdres disposés le long de la voie à intervalles connus du poste central, et dont le nombre et l'intervalle sont liés au niveau de précision du radar (11) et à la précision souhaitée.

11. Système suivant l'une des revendications 9 et 10, caractérisé en ce qu'une balise de levée d'indétermination et de repositionnement (11-1) est disposée à chaque embranchement de chaque aiguillage du réseau, des balises de repositionnement uniquement sont disposées le long de chaque ligne à intervalles réguliers de plusieurs kilomètres les unes des autres et les balises d'armement d'une chaine spatiale sont disposées sur la traversée de chaque tunnel et zone d'ombre.

12. Système suivant l'une quelconque des revendications précédentes, caractérisé en ce que l'unité centrale (10) de l'équipement embarqué sur chaque train contient un programme (Fig. 13) de traitement des signaux reçus des balises (11-1) en vue de la transmission du numéro d'identification de celles-ci au poste central pour un repositionnement géographique précis pdu train, un programme (Fig.14) d'acquisition et de reconnaissance des messages d'identification des balises formés par les dièdres au sol, un programme de traitement des signaux du radar doppler supporté par le microprocesseur (39) (Fig.4) en vue de la constitution d'un signal doppler exploitable par l'unité centrale (10) et de la connaissance du sens de marche, un programme (Fig.15) de traitement du signal du radar doppler (11) en vue de la mesure de l'espace parcouru par le train depuis la dernière balise rencontrée et transmis au poste cental ainsi que du calcul de la vitesse réelle transmise au poste de visualisation (15) (Fig.2) à destination du conducteur, et un programme (Fig. 16) de traitement des messages en provenance du poste central (2) permettant de transmettre la vitesse "objectif" au poste de visualisation (15) (Fig.2) du conducteur et de maintenir ou non l'autorisation de marche du train à la sortie (AM1) de la chaine temporelle de l'équipement embarqué (Fig. 18).

13. Système suivant la revendication 12, caractérisé en ce que ladite unité centrale (10) contient en outre un programme "chien de garde" (Fig.17) destiné à ne commander le circuit de freinage de service (16) qu'à la suite de la réception du poste central de deux messages consécutifs ne contenant pas le numéro du train considéré ou à la suite de l'absence, pendant deux cycles successifs, de message en provenance du poste central.

14. Système suivant l'une quelconque des revendications précédentes, caractérisé en ce que le poste central (2) ne reçoit des équipements embarqués des trains qu'une information de localisation lui suffisant, à partir de sa propre base de temps, à déterminer les vitesses de chaque train et en ce que le poste central (2) sait détecter toute faille dans la mesure de l'espace parcouru par le dispositif (11) de détection de position de chaque convoi, grâce à des contrôles continus cohérence des messages reçus par rapport aux messages antérieurs et à ses données mémorisées dans ses moyens (78) de mémorisation des itinéraires de chaque convoi et des caractéristiques du réseau liées à l'encadrement de vitesse.

**Patentansprüche**

1. System zur Steuerung der Fahrt mehrerer Eisenbahnzüge auf einem Netz, wobei jeder Zug eine an Bord befindliche Vorrichtung (11) zum Erkennen der Position des Zuges in bezug zum Gleis und mit einer Zentralstelle (2) in Verbindung stehende Sendeempfängereinrichtungen (7, 13) aufweist, wobei die Zentralstelle eine Einrichtung (70) zum unmittelbaren Speichern der relativen Positionen aller Züge auf dem Netz sowie eine Einrichtung (78) zum Speichern der Fahrstrecken jedes Zuges und der mit dem Geschwindigkeitsrahmen verbundenen Eigenschaften des Netzes sowie der technischen Daten der in Betrieb befindlichen Eisenbahnfahrzeuge aufweist, dadurch gekennzeichnet, daß die Zentralstelle das Initiativorgan des Systems ist und Einrichtungen (72, 8) aufweist, die, unter Berücksichtigung der von der Zentralstelle (2) empfangenen Positionsangaben und der in der Speichereinrichtung (78) enthaltenen Geschwindigkeitsrahmenparameter, in regelmäßigen Zeitintervallen Nachrichten senden, die die Identifizierungsnummern der im Betrieb befindlichen Züge, welche ihren Weg fortsetzen dürfen, enthalten, und daß die in jedem Zug an Bord befindliche Vorrichtung das Ausführungsorgan des Systems bildet und eine Einrichtung (10) zum Erkennen der Identifizierungsnummer des Zuges, dem sie zugeordnet ist, und eine Steuereinrichtung (16) zum Anhalten des Zuges bei Nichtvorhandensein der Identifizierungsnummer in der Nachricht, die sie von der Zentralstelle (2) empfängt, aufweist.

2. System nach Anspruch 1, dadurch gekennzeichnet, daß die Zentralstelle (2) einen Zentralrechner (70) aufweist, dessen Betriebsspeicher die Einrichtungen zum unmittelbaren Speichern der relativen Positionen jedes Zuges auf dem Netz und der parametrierbaren Elemente dieses Netzes bildet, wobei der Zentralrechner (70) über eine "Datenfonie"-Interfaceschaltung (71) mit einem Sendeempfänger (72), der mit einer Antenne (8) zur Kommunikation mit den an Bord der sich auf dem Netz bewegenden Züge befindlichen Vorrichtungen verbunden ist, und mit einem Festplattenspeicher (78) zum Speichern der Strecken jedes Zuges, der mit dem Geschwindigkeitsrahmen verbundenen Eigenschaften des Netzes und der technischen Daten der in Betrieb befindlichen Eisenbahnfahrzeuge verbunden ist.

3. System nach Anspruch 2, dadurch gekennzeichnet, daß die Zentralstelle (2) ferner einen mit dem zentralrechner (70) verbundenen Steuerinterfacerechner (80), mit dem Leistungssteuerungsrechner (80) verbundene Leistungssteuerschaltungen (81) und eine Anzeigetafel (84) mit numerischen Anzeigen (85) aufweist, die mit Leuchtanzeigen (86) versehen ist, welche eine graphische Wiedergabe des Netzes (87) anzeigen.

4. System nach einem der Ansprüche 1 bis 3, dadurch gekennzeichnet, daß die in jedem Zug an Bord befindliche Vorrichtung einen Bordrechner (10) aufweist, der einerseits mit einem Doppler-Radar (11) zum Bestimmen der Bewegung des Zuges in bezug auf die von ihm befahrene Strecke und andererseits über eine Interfaceschaltung zum Eingeben modulierter numerischer Daten in einen Funksprechkanal (12) mit einer Sendeempfängereinrichtung (13) sowie mit einem für den Zugführer bestimmten Funksprechgerät (14) verbunden ist.

5. System nach Anspruch 4, dadurch gekennzeichnet, daß das Doppler-Radar (11) mit dem Bordrechner (10) über eine Radarsignalverarbeitungsinterfaceschaltung (18) und eine Parallel-Interfaceschaltung (24), die ferner mit der Betriebsbremsensteuerschaltung (16) verbunden ist, verbunden ist.

6. System nach einem der Ansprüche 4 und 5, dadurch gekennzeichnet, daß der Bordrechner (10) durch einen Bus (29) mit einer Interfaceschaltung (30) zum seriellen Senden an eine dem Zugführer zur Verfügung stehende Anzeigeeinrichtung (15) verbunden ist.

7. System nach einem der Ansprüche 5 und 6, dadurch gekennzeichnet, daß die Radarsignalverarbeitungsinterfaceschaltung (18) aufweist: einen ersten Eingang (19), der über ein Tiefpaßfilter (35), einen Verstärker (36) mit regelbarer Verstärkung und einen Analog-Digital-Wandler (37 mit einem Mikroprozessor (39) verbunden ist, einen gegenüber dem ersten um 90° phasenversetzten zweiten Eingang (20), der über ein Tiefpaßfilter (40), einen Verstärker (41) mit regelbarer Verstärkung und einen Analog-Digital-Wandler (42) mit dem Mikroprozessor (39) verbunden ist, wobei sich die Verbindungsbusse (38, 43) des ersten Eingangs (19) und des zweiten Eingangs (20) zum Mikroprozessor (39) zu einem gemeinsamen Datenbus verbinden, wobei der Mikroprozessor (39) von einer logischen Unterbrechungsschaltung (46) gesteuert ist, die mit einem mit dem Datenbus (44) verbundenen programmierbaren Taktgeber (45) verbunden ist, und die Ausgänge des Mikroprozessors mit einer ersten Interfaceschaltung (53) zur Erzeugung eines digitalisierten Doppler-Signale (S.DOP) und einer zweiten Interfaceschaltung (55) zur Erzeugung eines Zug-Richtungssignals verbunden ist.

8. System nach Anspruch 7, dadurch gekennzeichnet, daß die Radarsignalverarbeitungsinterfaceschaltung (18) ferner einen Pfad (48, 49, 50) aufweist, der mit dem zweiten Eingang (20) der Schaltung verbunden und zum Liefern eines Signals (SDI) vorgesehen ist, das das von entlang der Gleise angeordneten passiven Markierungselementen (11-1) reflektierte Radarsignal ist, und das für jedes aufgetretene Markierungselement in ein Rechteckwellen-Signal umgewandelt wird.

9. System nach Anspruch 8, dadurch gekennzeichnet, daß die Markierungselemente (11-1) aus entlang der Gleise angeordneten Winkeln bestehen, die die Radarsignale reflektieren.

10. System nach Anspruch 9, dadurch gekennzeichnet, daß die passiven Markierungen durch entlang der Gleise in der Zentralstelle bekannten Abständen angeordnete Gruppen von Winkeln gebildet sind und daß deren Zahl und Abstände in Verbindung mit dem Genauigkeitsniveau des Radars (11) und der gewünschten Genauigkeit stehen.

11. System nach einem der Ansprüche 9 und 10, dadurch gekennzeichnet, daß an jeder Abzweigung jeder Weiche des Netzes eine Markierung zur Aufhebung der Unbestimmtheit und zur Repositionierung (11-1) angeordnet ist, daß nur der Repositionierung dienende Markierungen entlang jeder Linie mit regelmäßigen Abständen von mehreren Kilometern zwischen den jeweiligen Markierungen angeordnet sind und daß die Verstärkungsmarkierungen einer räumlichen Kette an der Durchfahrt jedes Tunnels und jeder Schattenzone angeordnet sind.

12. System nach einem der vorhergehenden Ansprüche, dadurch gekennzeichnet, daß die Zentraleinheit (10) der in jedem Zug befindlichen Vorrichtung aufweist: ein Programm (Fig. 13) zur Verarbeitung der von den Markierungen (11-1) her empfangenen Signale hinsichtlich des Sendens ihrer Identifizierungsnummer an die Zentralstelle zum Zweck einer genauen geographischen Repositionierung des Zuges, ein Programm (Fig. 14) zum Aufnehmen und Erkennen von die durch am Boden befindliche Winkel gebildeten Markierungen identifizierenden Nachrichten, ein Programm (Fig. 4) zur Verarbeitung der Doppler-Radarsignale, das vom Mikroprozessor (39) hinsichtlich der Erstellung eines von der Zentraleinheit (10) auswertbaren Doppler-Signals und der Erkennung der Fahrtrichtung unterstützt wird, ein Programm (Fig. 15) zur Verarbeitung des Doppler-Radarsignals (11) hinsichtlich der Messung des seit der letzten passierten Markierung und der letzten Übertragung an die Zentralstelle zurückgelegten Wegs und zur Berechnung der an die Anzeigeeinrichtung (15) (Fig. 2) des Zugführers gesendeten tatsächlichen Geschwindigkeit, und ein Programm (Fig. 16) zur Verarbeitung der von der Zentralstelle (2) kommenden Nachrichten, das die Übertragung der "objektiven" Geschwindigkeit an die Anzeigeeinrichtung (15) (Fig. 2) des Zugführers und das Aufrechterhalten oder das Aufheben der Fahrerlaubnis für den Zug am Ausgang (AM1) der Zeitkette der im Zug befindlichen Vorrichtung (Fig. 18) ermöglicht.

13. System nach Anspruch 12, dadurch gekennzeichnet, daß die Zentraleinheit (10) ferner ein "Wachhund"-Programm aufweist (Fig. 17), das dazu bestimmt ist, die Betriebsbremsenschaltung (16) nur anzusteuern, nachdem die Zentralstelle zwei aufeinanderfolgende Nachrichten empfangen hat, die die Nummer des betreffenden Zuges nicht enthielten, oder nachdem während zweier aufeinanderfolgender Zyklen keine Nachricht von der Zentralstelle her empfangen wurde.

14. System nach einem der vorhergehenden Ansprüche, dadurch gekennzeichnet, daß die Zentralstelle (2) von den an Bord befindlichen Vorrichtungen der Züge nur eine Lokalisierungsinformation erhält, die für die Zentralstelle ausreicht, um auf der Grundlage ihrer eigenen Zeitbasis die Geschwindigkeiten jedes Zuges zu ermitteln und daß die Zentralstelle (2) in der Lage ist, jeden Fehler in der von der Positionserkennungseinrichtung (11) jedes Zuges durchgeführten Messung der zurückgelegten Strecke aufgrund von kontinuierlichen Kontrollen der Kohärenz zwischen den empfangenen Nachrichten und den vorhergehenden Nachrichten und aufgrund der Daten, die in der Einrichtung (78) zum Speichern der Fahrstrecken jedes Zuges und der mit dem Geschwindigkeitsrahmen verbundenen Eigenschaften des Netzes gespeichert sind, zu erkennen.

## Claims

1. System for the control of the progression of several railway trains in a railway network, each train being equipped with an on-board device (11) for detecting the position of the train with respect to the track and with transmit-receive means (7, 13) communicating with a central station (2), the said central station comprising means (70) of instantaneous storage of the relative positions of all of the trains in the railway network, means (78) of storage of the itineraries of each train and of the characteristics of the network related to the speed range, and of the performance of the rolling stock in service, characterized in that the said central station constitutes the organizing unit of the system and comprises means (72, 8) of transmission at regular time intervals of messages containing the identification numbers of the trains in circulation which are authorized to follow their route taking account of position information received from these trains by the central station (2) and of speed range parameters contained in the means of storage (78) and in that the device on board each train constitutes the execution unit of the system and comprises means (10) of recognition of the identification number of the train with which it is associated and means (16) of controlling the stopping of the train in the absence of the identification number in the message which it receives from the central station (2).

2. System according to Claim 1, characterized in that the central station (2) comprises a central computer (70) whose random access memory constitutes the means of instantaneous storage of the relative positions of all of the trains in the railway network, and the elements of this network to which parameters can be applied, the said central computer (70) being connected by means of a "telephonic-data" interface circuit (11) to a transmitter-receiver (72) associated with an antenna (8) for communication with the devices on board of the trains circulating in the network to a hard disk memory (78) for the storage of the itineraries of each train, of the characteristics of the network related to the speed range and of the performance of the rolling stock in service.

3. System according to Claim 2, characterized in that the central station (2) furthermore comprises a control interface computer (80) connected to the central computer (70), power control circuits (81) connected to the said power control computer (80) and a display panel (84) having numerical displays (85), provided with light indicators (86) laying out a graphical reproduction of the railway network (87)

4. System according to any of Claims 1 to 3, characterized in that the on-board device in each train comprises an on-board computer (10) connected on the one hand to a Doppler radar (11) for determining the displacement of the train with respect to the track on which it is travelling and, on the other hand, to transmit-receive means (13) by means of an interface circuit for the insertion of modulated digital data in a telephonic channel (12), and to telephonic equipment (14) intended for the driver.

5. System according to Claim 4, characterized in that the Doppler radar (11) is connected to the on-board computer (10) by means of an interface circuit (18) for the processing of the radar signals and a parallel interface circuit (24) also connected to the service braking control circuit (16).

6. System according to either of Claims 4 and 5, characterized in that the on-board computer (10) is connected by a bus (29) to a serial transmission interface circuit (30) going to a display unit (15) for use by the driver.

7. System according to either of Claims 5 and 6, characterized in that the interface circuit (18) for processing the radar signals comprises a first input (19) connected to a microprocessor (39) by means of a low pass filter (35), a variable gain amplifier (36) and an analog-digital converter (37), a second input (20) phaseshifted by 90° with respect to the first one, connected to the microprocessor (39) by means of a low pass-filter (40), a variable gain amplifier (41) and an analog-digital converter (42), the interface buses (38, 43) between the first input (19) and the second input (20) and the microprocessor (39) being joined together as a common data bus, the said microprocessor (39) being controlled by a logic interrupt circuit (46) associated with a programmable clock (45) connected to the data bus (44) and being connected by its outputs to a first interface circuit (53) for generating a digitized Doppler signal (S.DOP) and to a second interface circuit (55) for generating a signal giving the direction of the train.

8. System according to Claim 7, characterized in that the interface circuit (18) for processing the radar signals furthermore comprises a channel (48, 49, 50) connected to the second input (20) of the circuit and intended to supply a signal (SDI) which is the radar signal reflected by the passive beacon elements (11-1) disposed on the track and transformed into a rectangular signal corresponding to each beacon element encountered.

9. System according to Claim 8, characterized in that the beacon elements (11-1) are constituted by dihedrons reflecting the radar signals and disposed on the track.

10. System according to Claim 9, characterized in that the passive beacons are constituted by groups of dihedrons disposed along the track at intervals known by the central station and whose number and interval are related to the level of accuracy of the radar (11) and to the desired accuracy.

11. System according to either of Claims 9 and 10, characterized in that a beacon for the removal of uncertainty and for repositioning (11-1) is disposed at each branch of each point in the network, repositioning beacons only are disposed along each line at regular intervals of a few kilometres from each other and the beacons for loading a space system are disposed at the crossing of each tunnel and shaded zone.

12. System according to any of the previous claims, characterized in that the central processing unit (10) of the on-board equipment in each train contains a program (Figure 13) for processing the signals received from the beacons (11-1) for the purpose of transmission of the identification number of the latter to the central station for a precise geographic repositioning of the train, a program (Figure 14) for the acquisition and recognition of beacon identification messages formed by the dihedrons on the ground, a program for the processing of the signals from the Doppler radar supported by the microprocessor (39) (Figure 4) for the purpose of constituting a Doppler signal which can be used by the central processing unit (10) and in order to know the direction of travel, a program (Figure 15) for processing the signal from the Doppler radar (11) for the purpose of measuring the space travelled by the train since the last beacon encountered and transmitted to the central station and for the computation of the real speed transmitted to the display unit (15) (Figure 2) for use by the driver, and a program (Figure 16) for processing messages coming from the central station (2) enabling the transmission of the "target" speed to the driver's display unit (15) (Figure 2) and the maintenance or otherwise of the authorization for the running of the train at the output (AM1) of the time system of the on-board equipment (Figure 18).

13. System according to Claim 12, characterized in that the said central processing unit (10) furthermore contains a "watch dog" program (Figure 17) intended to control the service braking circuit (16) only following the reception from the central station of two consecutive messages not containing the number of the train in question or following the absence during two successive cycles of a message coming from the central station.

14. System according to any of the previous claims, characterized in that the central station (2) receives from the on-board equipment of the trains only one piece of location information which is sufficient for it, on the basis of its own time base, to determine the speeds of each train and in that the central station (2) can detect any fault in the measurement of the space travelled by the device (11) for detecting the position of each train, by means of continuous checks on the consistency of the messages received with respect to the previous messages and to its data stored in its means (78) of storage of the itineraries of each train and of the characteristics of the network related to the speed range.

FIG.1

EP 0 388 272 B1

FIG.2

FIG.3

20

FIG.4

EP 0 388 272 B1

12

phonie → 60 → 61 → 62 → 63

Temps de base

64

13

10 → 58 → 59

## FIG.5

## FIG.6

85 87

888

86 84

8

72

81 81

81

71 79

81

80

78 77

73 70

75

74

76

Signal phone

Signal traité

Compression dans le temps
de la parole

ZOOM

DONNEES

DONNEES

DONNEES

DONNEES

Temps de base

## FIG.5a

EP 0 388 272 B1

## FIG.7

~ 11-1

11-1

11-1

11-1

11-1

**FIG.8a**

Vitesse Train

Vitesse de consigne

V1-2    T1

T2    V2-3    T3    V3-4    T4    V4-5    T5    V5-6    T6

Détection de survitesse

Freinage de service

Autorisation de marche    A1    A2    A3

Application du freinage après perte de 2 autorisations

P1    Dp    P2    P3    P4    P5    P6    Espace

Distance de dépassement pour une vitesse de consigne

**FIG.8b**

Vitesse Train

Vitesse de consigne système

Détection de survitesse

Autorisation de marche    A1    A2    A3    A4    A5

Reprise traction

Freinage de service

P1    P2    P3    P4    P5    P6    P7    P8    P9    Espace

## FIG.9

Balise d'introduction

Détecteurs de présence

Voie sec.

Bal 2

11.1    A    91    L4    11.1    93

Voie principale

L1    B    Bal 1

EP 0 388 272 B1

Temps T d'exécution de la boucle

Temps de cycle du système

100

101

102

103

104 oui

non 105

vitesse validée survitesse

106

107

FIG.10

D A B

25

FIG.11

FIG.12

# FIG.13

# FIG.14

SDI

non —128— oui

—129—

—130—

—131—

oui —132— non

—133—

—135—

—134—

S.DOP
Fol 2.

136

137 ← SENS Fol 2

MAV  MAR

138   139

140

## FIG.15

141

142 — TRVIT

non  143  oui

144

non  145  oui

146 — AM2

147

RCPC
Fol 2

## FIG.16

- 148 -

-149-

150   non   oui

- 151 -

-152-    TRVIT

-153-

-154-

- 155 -    TRPC

- 156 -    AM 1

- 157 -

# FIG.17

AM1

AM2

164

Alimentation

165

166

Commande
freinage de service

# FIG.18